(19) Europäisches Patentamt
European Patent Office
Office européen des brevets

(11) **EP 4 071 117 A1**

(12) **EUROPEAN PATENT APPLICATION**

(43) Date of publication:
**12.10.2022 Bulletin 2022/41**

(21) Application number: **22154367.1**

(22) Date of filing: **17.09.2015**

(51) International Patent Classification (IPC):
***C02F 1/44*** (2006.01)     ***B01D 61/00*** (2006.01)

(52) Cooperative Patent Classification (CPC):
(C-Sets available)
**B01D 61/005; B01D 61/002; C02F 1/445;**
B01D 2311/04; B01D 2311/06; B01D 2311/10;
B01D 2311/18; B01D 2311/25           (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **11.08.2015  US 201562203793 P**

(62) Document number(s) of the earlier application(s) in
accordance with Art. 76 EPC:
**15900618.8 / 3 334 692**

(71) Applicant: **Forward Water Technologies
Kingston, Ontario K7L 3N6 (CA)**

(72) Inventors:
• **RESENDES, Rui
  Kingston, K7P 0B5 (CA)**

• **HOLLAND, Amy Marie
  Kingston, K7M 6X4 (CA)**
• **CLARK, Timothy James
  Kingston, K7M 1N8 (CA)**
• **MARIAMPILLAI, Brian Ernest
  Inverary, K0H 1X0 (CA)**
• **DUMONT, Robert Harold Jean
  Gananoque, K7G 1K6 (CA)**

(74) Representative: **Williams, Paul Edwin et al
Lewis Silkin LLP
5 Chancery Lane
Clifford's Inn
London EC4A 1BL (GB)**

Remarks:
This application was filed on 31-01-2022 as a
divisional application to the application mentioned
under INID code 62.

(54) **A SWITCHABLE FORWARD OSMOSIS SYSTEM, AND PROCESSES THEREOF**

(57)     The present application provides a switchable forward osmosis system, and processes thereof. In particular, this application provides a process for treating an aqueous feed stream, comprising: forward osmosis using an aqueous draw solution having a draw solute concentration of ≥20 wt%, the draw solute comprising ionized trimethylamine and a counter ion; wherein, the feed stream: (i) comprises ≥5wt% total dissolved solids; (ii) is at a temperature of ≤20°C; (iii) is at a temperature between ≥30°C - ≤60°C; (iv) has an acidic pH or a basic pH; (v) comprises organic content; (vi) comprises suspended solids; (vii) or any combination of two or more of i) - v). Also provided herein are the related system and draw solution for performing the process, and various uses thereof for treating typically difficult to dewater feed streams.

FIGURE 1A

EP 4 071 117 A1

**Calibration curve for GC-FID analysis of ionized trimethylamine**

$y = 1.5998x - 0.0271$
$R^2 = 0.9993$

FIGURE 1B

**Ionized trimethylamine FT-IR calibration curve**

$y = 2.6994x$
$R^2 = 0.99985$

FIGURE 1C

(52) Cooperative Patent Classification (CPC): (Cont.)

C-Sets
B01D 2311/04, B01D 2311/10, B01D 2311/18;
B01D 2311/06, B01D 2311/25, B01D 2311/06

**Description**

FIELD OF THE INVENTION

The present application pertains to the field of water treatment systems. More particularly, the present application relates to a switchable forward osmosis system, and related compositions and processes.

BACKGROUND

A challenge facing many industries is remediation or disposal of wastewater generated by industrial processes. Drilling and hydraulic fracturing in oil and gas industries, for example, generates produced water, which can be difficult to treat and is facing growing disposal restrictions. Produced water is water from underground formations that is brought to the surface during oil or gas production. Shale gas production, for example, can generate approximately 25 - 1000 gallons of produced water per million cubic feet of gas produced (gal/MMcf), depending on the region [Shaffer, D. L. et al., Environ. Sci. Technol. 2013, 47, 9569-9583].

Such produced water often contains a higher concentration of total dissolved solids (TDS) than is typically allowed for potable, or surface discharged water; for example, some produced water has a TDS range of 8000 to 360 000 mg/L, whereas certain water quality standards only allow 500 mg/L. Further, the produced water can contain chemicals used in the oil and gas recovery process, which can result in the produced water having a low or high pH, a high organic content, or a relatively high concentration of suspended solids [R.L. McGinnis et al., Desalination, 2013, 312, 67-74; Shaffer, D. L. et al., Environ. Sci. Technol. 2013, 47, 9569-9583].

A commonly employed method of wastewater disposal involves deep-well injections, which comprises transporting and injecting wastewater into previously drilled wells. Such methods of disposal can be costly: for example, disposal costs of produced water from Montney Shale in Western Canada are approximately \$50/m$^3$ [Paktinat, J. et al., Canadian Society for Unconventional Gas/Society of Petroleum Engineers, 149272, 2011]. There are also certain dangers associated with deep-well disposal: for example, such disposal methods can apply pressure to existing fault lines, inducing "man-made" earthquakes. As reported by the US Geological Survey (USGS), an average of 100 earthquakes occurred annually between 2010 and 2013, as compared to an average of 20 earthquakes observed annually between 1970 and 2000; this was found to correspond with an increase in hydraulic fracturing and waste disposal through deep-well injections [http://time.com/84225/fracking-and-earthquake-link/, accessed on June 12, 2015; http://www.cbc.ca/news/canada/calgary/earthquake-hazard-linked-with-deep-well-injection-in-alberta-1.2751963 accessed on June 12, 2015; http://www.usgs.gov/blogs/features/usgs_top_story/man-made-earthquakes/, accessed on June 12, 2015].

As an alternative to disposal methods, currently employed methods for remediating wastewater include distillation (e.g., mechanical vapour compression, "MVC"), crystallization, reverse osmosis, and forward osmosis. MVC is an evaporative technique that uses an open-loop heat pump to evaporate water from high-salinity produced water. Such evaporative techniques are inherently energy intensive; and, while MVC units can operate at 60°C, their specific energy consumptions can approach 14 kWh/m$^3$ distillate (for example, 13.6 kWh/m$^3$ distillate energy consumption, at 600 m$^3$ distillate/day and 30% recovery of distillate from the produced water) [Shaffer, D. L. et al., Environ. Sci. Technol. 2013, 47, 9569-9583]. Crystallization, in contrast, is an evaporative wastewater remediation process that involves complete water evaporation: it results in formation of solid salts, thus offering a zero liquid discharge remediation process. However, crystallization is often considered a costly remediation method, partially owing to its high mechanical/thermal energy requirement.

Reverse osmosis (RO) is a membrane-based separation process that forces solvent (e.g., wastewater) from an area of high solute concentration (feed solution), through a semi-permeable, salt-excluding membrane, to an area of low solute concentration by applying hydraulic pressure to overcome the system's inherent osmotic pressure differential. Generally, the required hydraulic pressures are high ($\geq$ 50 atm) and, consequently, the energy consumption from RO can be comparable to MVC. RO's performance is further exacerbated by membrane fouling, and a high-pressure operating limit of 70 000 mg/L TDS for feed solution concentrations [Shaffer, D. L. et al., Environ. Sci. Technol. 2013, 47, 9569-9583; Stone, M. L., et al., Desalination, 2013, 312, 124-129].

In contrast, forward osmosis (FO), another membrane-based separation process, offers a lower cost, lower pressure alternative to the other methods of water remediation. FO operates by spontaneous movement of water across a semi-permeable membrane, as a result of the inherent difference in osmotic pressure between the feed solution (e.g., wastewater) on one side of the salt-excluding semi-permeable membrane, and the draw solution, containing a high concentration of draw solute, on the other side of the membrane. Once the osmotic pressures have equalized on both sides of the membrane, movement of water ceases. Clean water can be obtained by separation of the draw solute from the water in the diluted draw solution.

To facilitate isolation of water from FO systems via removal of draw solutes from diluted draw solution, switchable and/or thermolytic draw solutes have been developed.

As described in PCT application, PCT/CA2011/050075, Jessop et al. developed a switchable water composition, and related systems, that is switchable between an initial ionic strength and an increased ionic strength; the composition comprises water and a switchable amine additive. The amine additive, comprising at least one nitrogen sufficiently basic to be protonated, can be reversibly converted to an ammonium salt in the presence of water and an ionizing trigger (e.g., $CO_2$), thereby increasing the water's ionic strength and osmotic pressure. Exposing the ionic system to reduced pressures, heat, and/or a flushing gas (e.g., air, nitrogen) causes deprotonation of the amine additive, returning the water to its initial ionic strength. The deprotonated additive is typically more easily isolable from water, as compared to its ionic counterpart. The inherent characteristics of the switchable water composition, including its capacity for a reversible increase in ionic strength and osmotic pressure, and the removability of the switchable additive from the water, makes this composition particularly well suited for use as a FO draw solution.

As described by Neff, in U.S. patent US3130156, and later by McGinnis (see, for example, U.S. patent US7560029), FO systems comprising thermolytic ammonia-based draw solutions have also been developed. These ammonia-based FO systems incorporate a relatively high osmotic pressure draw solution generated by exposing ammonia to $CO_2$ in the presence of water to produce ammonium salts. Isolation of water from such FO systems is purportedly possible by decomposing the ammonium salts of the diluted draw solution into their constituent gases and separating those gases from the water. However, as described by Jessop et al., processes involving ammonia-based draw solutions are more energy intensive than those involving amine-based draw solutions: for example, deprotonation of an $NH_4^+$ salt requires an energy input of 52.3 kJ/mol, versus only 36.9 kJ/mol for comparable $NR_3H^+$ systems [Mucci, A.; Domain, R.; Benoit, R. L. Can. J. Chem. 1980, 58, 953-958].

More recently, Ikeda et al., Elimelech et al. and Forward Water Technologies described FO systems comprising trimethylamine (TMA) based draw solutions [see, for example, PCT application PCT/JP2011/072261; and, Boo, C., Journal of Membrane Science, 2015, 473, 302-309]. TMA is an amine additive capable of switching between a neutral form and an ionized form when exposed to ionizing triggers (e.g., acid gases) in the presence of water; and, thus, is useful for providing solutions having switchable osmotic strength, as first described by Jessop et al.. Like ammonia, TMA is a gas at ambient temperature and pressure; and as such, application of reduced pressures, heat, or flushing gases to a solution comprising an ionized TMA salt will revert it back into its constituents, including TMA gas, thereby facilitating removal of TMA from the solution. Therefore, as with ammonia-based FO systems, TMA-based FO systems offer a facile means for isolating water from the draw solution; and, at a lower energy requirement than ammonia-based systems.

Ikeda et al. demonstrated use of their ionized TMA-based FO system with feed solutions containing 0.1 - 3.5 wt% TDS, while Elimelech et al. used only deionized water as the feed solution merely to demonstrate the usability of TMA as a draw solute. Both groups employed fairly dilute draw solutions in their FO systems: < 26 wt% (Ikeda et al.); and 11 wt% (Elimelech et al.) ionized TMA. The studies performed by Ikeda et al., and Elimelech et al. demonstrated the use of ionized TMA as a switchable agent in the draw solution of an FO system with a fresh water feed stream or feed stream having a salt concentration approximately equivalent to sea water. The feed streams used in these studies are readily employed in RO systems. However, as described above, RO systems have a high-pressure operating limit of 70 000 mg/L TDS for feed solutions; more concentrated feed streams generally cannot be treated using RO and require alternative treatment methods.

There remains a need for an FO system that operates at a lower energy than ammonia-based FO systems, offers a facile method of draw solute separation from water, and that has utility in remediating feed solutions that would otherwise be untreatable by RO systems, such as industrial process wastewater having high TDS.

The above information is provided for the purpose of making known information believed by the applicant to be of possible relevance to the present invention. No admission is necessarily intended, nor should be construed, that any of the preceding information constitutes prior art against the present invention.


SUMMARY OF THE INVENTION


An object of the present application is to provide a switchable forward osmosis system, and processes thereof.

In accordance with an aspect of the present application, there is provided a process for treating an aqueous feed stream, comprising: forward osmosis using an aqueous draw solution having a draw solute concentration of ≥20 wt%, wherein the draw solute comprises ionized trimethylamine and a counter ion; wherein, the feed stream: (i) comprises ≥5wt% total dissolved solids; (ii) is at a temperature of ≤20°C; (iii) is at a temperature between ≥30°C - ≤60°C; (iv) has an acidic pH or a basic pH; (v) comprises organic content; (vi) comprises suspended solids; or (vii) any combination of two or more of i) - vi).

In accordance with one embodiment, there is provided a process comprising forward osmosis, wherein the forward osmosis comprises: a) introducing the feed stream to one side of a semi-permeable membrane that is selectively permeable to water; b) introducing the draw solution to the other side of the semi-permeable membrane; c) permitting flow of water from the feed solution through the semi-permeable membrane into the draw solution to form a concentrated feed solution and a dilute draw solution.

In accordance with another embodiment, there is provided a process comprising forward osmosis, wherein the forward osmosis further comprises d) isolating the draw solute from the dilute draw solution; and e) reconstituting the concentrated draw solution from the isolated draw solute.

In accordance with another embodiment, there is provided a process wherein separating the draw solute from the dilute draw solution comprises reverse osmosis; volatilization; heating; a flushing gas; a vacuum or partial vacuum; agitation; or any combination thereof.

In accordance with another embodiment, there is provided a process wherein reconstituting the concentrated draw solution comprises: a) introducing an ionizing trigger, such as carbon dioxide, to an aqueous solution of trimethylamine; b) introducing trimethylamine to an aqueous solution of an ionizing trigger, such as carbon dioxide; c) simultaneously introducing trimethylamine and an ionizing trigger, such as carbon dioxide, to an aqueous solution; or d) any combination thereof.

In accordance with another embodiment, there is provided a process wherein the process is i) a closed process; ii) a continuously cycled process; or, iii) a combination thereof.

In accordance with another embodiment, there is provided a process wherein the feed solution comprises between 5 - 30wt% total dissolved solids; or, alternatively, between 5 - 25wt% total dissolved solids; or, alternatively, between 5 - 20wt% total dissolved solids; or, alternatively, between 5 - 15wt% total dissolved solids; or, alternatively, between 5 - 10wt% total dissolved solids; or, alternatively, between 6 - 10wt% total dissolved solids.

In accordance with another embodiment, there is provided a process wherein the total dissolved solids comprise metal oxides; minerals; monovalent ions; divalent ions; trivalent ions; or any combination thereof.

In accordance with another embodiment, there is provided a process wherein the feed solution is at a temperature between 0 - 15°C; or, alternatively, between 0 - 10°C; or, alternatively between 0 - 5°C; or, alternatively, between 3 - 5°C.

In accordance with another embodiment, there is provided a process wherein the feed solution is at a temperature between 30 - 60°C; or, alternatively, 30 - 50°C; or, alternatively, 30 - 40°C; or, alternatively, 30 - 35°C.

In accordance with another embodiment, there is provided a process wherein the feed solution has a pH $\leq 6$; or, alternatively, $\leq 5$; or, alternatively, $\leq 3$. In accordance with another embodiment, there is provided a process wherein the feed solution has a pH $\geq 8$; or, alternatively, $\geq 9$; or, alternatively, $\geq 11$.

In accordance with another embodiment, there is provided a process wherein the organic content of the feed solution comprises suspended or solubilized organic compounds, carbohydrates, polysaccharides, proteins, algae, viruses, plant matter, animal matter, or any combination thereof.

In accordance with another embodiment, there is provided a process wherein the feed solution comprises suspended solids.

In accordance with another embodiment, there is provided a process wherein the feed solution is hard water, process water, produced water, flowback water, wastewater, or any combination thereof.

In accordance with another embodiment, there is provided a process wherein the draw solution has a draw solute concentration between $\geq 30$wt% to saturation; or, alternatively, between 30 - 70wt%; or, alternatively, between 30 - 60wt%; or, alternatively, between 30 - 50wt%; or, alternatively, between 30 - 40wt%. In accordance with another embodiment, there is provided a process wherein the draw solution has a draw solute concentration between 30 - 40wt%; or, alternatively, between 60 - 70wt%.

In accordance with another embodiment, there is provided a process wherein the feed stream is a complex feed stream that comprises $\geq 5$wt% total dissolved solids and (i) organic content; (ii) suspended solids; or (iii) both organic content and suspended solids.

In accordance with another aspect of the application, there is provided a forward osmosis system, comprising: (i) an aqueous draw solution having a draw solute concentration of $\geq 20$ wt%, the draw solute comprising ionized trimethylamine and a counterion; and (i) at least one forward osmosis element, comprising: a semi-permeable membrane that is selectively permeable to water, having a first side and a second side; at least one port to bring a feed solution in fluid communication with the first side of the membrane; and at least one port to bring the draw solution in fluid communication with the second side of the membrane, wherein water flows from the feed solution through the semi-permeable membrane into the draw solution, to form a concentrated feed solution and a diluted draw solution.

In accordance with one embodiment, there is provided a system further comprising further comprising a system for regenerating the draw solution, comprising: a) means for isolating the draw solutes or non-ionized forms of the draw solutes from the dilute draw solution; b) means for reconstituting the draw solution from the isolated draw solutes or the non-ionized forms of the draw solutes.

In accordance with another embodiment, there is provided a system wherein means for isolating the draw solute from the dilute draw solution comprises: a reverse osmosis system; volatilization; heating; a flushing gas; a vacuum or partial vacuum; agitation; or any combination thereof.

In accordance with another embodiment, there is provided a system wherein means for reconstituting the draw solution from the isolated draw solutes or the non-ionized forms of the draw solutes comprises: a) means for introducing an ionizing trigger, such as carbon dioxide, to an aqueous solution of trimethylamine; b) means for introducing trimethylamine to an aqueous solution of an ionizing trigger, such as carbon dioxide; c) means for simultaneously introducing trimethylamine and an ionizing trigger such as carbon dioxide to an aqueous solution; or d) any combination thereof

In accordance with another embodiment, there is provided a system wherein the system is: (i) closed; (ii) continuously cycled; or (iii) a combination thereof.

In accordance with another embodiment, there is provided a system wherein the feed solution comprises between 5 - 30wt% total dissolved solids; or, alternatively, between 5 - 25wt% total dissolved solids; or, alternatively, between 5 - 20wt% total dissolved solids; or, alternatively, between 5 - 15wt% total dissolved solids; or, alternatively, between 5 - 10wt%; or, alternatively, between 6 - 10wt% total dissolved solids.

In accordance with another embodiment, there is provided a system wherein the total dissolved solids comprise metal oxides; minerals; monovalent ions; divalent ions; trivalent ions; or a combination thereof.

In accordance with another embodiment, there is provided a system wherein the feed solution is at a temperature between 0 - 15°C; or, alternatively, between 0 - 10°C; or, alternatively between 0 - 5°C; or, alternatively, between 3 - 5°C.

In accordance with another embodiment, there is provided a system wherein the feed solution is a temperature between 30 - 60°C; or, alternatively, 30 - 50°C; or, alternatively, 30 - 40°C; or, alternatively, 30 - 35°C.

In accordance with another embodiment, there is provided a system wherein the feed solution has a pH $\leq$ 6; or, alternatively, $\leq$ 5; or, alternatively, $\leq$ 3. In accordance with another embodiment, there is provided a system wherein the feed solution has a pH $\geq$ 8; or, alternatively, $\geq$ 9; or, alternatively, $\geq$ 10.

In accordance with another embodiment, there is provided a system wherein the feed solution comprises organic content. In accordance with another embodiment, there is provided a system wherein the organic content comprises suspended or solubilized organic compounds, carbohydrates, polysaccharides, proteins, algae, viruses, plant matter, animal matter, or any combination thereof.

In accordance with another embodiment, there is provided a system wherein the feed solution comprises suspended solids.

In accordance with another embodiment, there is provided a system wherein the feed solution is hard water, process water, produced water, flow-back water, wastewater, or any combination thereof.

In accordance with another embodiment, there is provided a system wherein the draw solution has a draw solute concentration between $\geq$ 30wt% and saturation; or, alternatively, between 30 - 70wt%; or, alternatively, between 30 - 60wt%; or, alternatively, between 30 - 50wt%; or, alternatively, between 30 - 40wt%. In accordance with another embodiment, there is provided a system wherein the draw solution has a draw solute concentration between 30 - 40wt%; or, alternatively, between 60 - 70wt%.

In accordance with another embodiment, there is provided a system wherein the feed stream is a complex feed stream that comprises $\geq$5wt% total dissolved solids and (i) organic content; (ii) suspended solids; or (iii) both organic content and suspended solids.

In accordance with another aspect of the application, there is provided a draw solution for a forward osmosis process, comprising: (i) water; (ii) ionized trimethylamine at a concentration of $\geq$20 wt%; and (iii) an anionic species at a concentration suitable to act as a counter ion for the ionized trimethylamine.

In accordance with one embodiment, there is provided a draw solution wherein the ionized trimethylamine is present at a concentration of between $\geq$ 30wt% and saturation; or, alternatively, between 30 - 70wt%; or, alternatively, between 30 - 60wt%; or, alternatively, between 30 - 50wt%; or, alternatively, between 30 - 40wt%.

In accordance with another embodiment, there is provided a draw solution wherein the anionic species is carbonate, bicarbonate, or a combination thereof.

In accordance with another embodiment, there is provided a draw solution wherein the source of the anionic species is $CO_2$ gas.

BRIEF DESCRIPTION OF THE FIGURES AND TABLES

For a better understanding of the present application, as well as other aspects and further features thereof, reference is made to the following description which is to be used in conjunction with the accompanying drawings and tables, where:

Figure 1A depicts a diagram of an example of a forward osmosis (FO) flow cell, as described and used herein;

Figure 1B depicts a calibration curve for Gas Chromatography-Flame Ionizing Detector (GC-FID) analysis of ionized trimethylamine;

Figure 1C depicts a calibration curve for Fourier Transform Infrared Spectroscopy (FT-IR) analysis of ionized trimethylamine;

Figure 2 depicts a graph outlining a change in mass of a 66 wt% ionized trimethylamine draw solution with respect to time (3 hours) and various feed solution concentrations;

Figure 3 depicts a graph outlining a change in mass of a 33 wt% ionized trimethylamine draw solution with respect to time (3 hours);

Figure 4 depicts a graph outlining changes in mass, based on 24 hours of operation over 28 days, of a 33 wt% ionized trimethylamine draw solution with respect to time (24 hours), in a flow cell equipped with a 3 wt% NaCl feed solution;

Figure 5 depicts a graph outlining flux, based on first hour of operation over 28 days, obtained via a herein described FO flow cell equipped with a 33 wt% ionized trimethylamine draw solution and 3 wt% NaCl feed solution;

Figure 6 depicts a graph outlining reverse salt flux amounts, calculated after second hour of operation over 28 days, obtained via a herein described FO flow cell equipped with a 33 wt% ionized trimethylamine draw solution and 3 wt% NaCl feed solution;

Figure 7 depicts a graph outlining a change in mass of a 33 wt% ionized trimethylamine draw solution with respect to time (3 hours), in a FO flow cell equipped with a NaCl or NaCl/CaCl$_2$ comprising feed solutions (said NaCl/CaCl$_2$ comprising feed solutions indicated by % total dissolved solids; % TDS), of various concentrations;

Figure 8 depicts a graph outlining a change in mass of a 66 wt% ionized trimethylamine draw solution with respect to time (3 hours), in a FO flow cell equipped with a NaCl/CaCl$_2$ comprising feed solutions (said NaCl/CaCl$_2$ comprising feed solutions indicated by %TDS), of various concentrations;

Figure 9 depicts a graph outlining a change in mass of a 66 wt% ionized trimethylamine draw solution with respect to time (3 hours), in a FO flow cell equipped with a 6 wt% TDS feed solution (FS) while varying temperature of the feed solution;

Figure 10 depicts a graph outlining a change in mass of a 66 wt% ionized trimethylamine draw solution with respect to time (3 hours), in a FO flow cell equipped with a 6 wt% TDS feed solution (FS) while varying temperature of both feed and draw solution (DS);

Figure 11 depicts a graph outlining a change in mass of a 33 wt% ionized trimethylamine draw solution with respect to time (3 hours), in a FO flow cell equipped with a 6 wt% TDS feed solution (FS) while varying pH of the feed solution;

Figure 12 depicts a diagram of a demonstrative, non-limiting example of an equipment set-up for reconstitution of an ionized trimethylamine draw solution, as described and used herein;

Figure 13 depicts a graph outlining a control study of the change in mass of a 66 wt% ionized trimethylamine draw solution with respect to time (3 hours), in a FO flow cell equipped with a low salt aqueous feed solution (< 1wt% TDS);

Figure 14 depicts a calibration curve for FT-IR analysis of trimethylamine;

Figure 15 depicts a graph outlining a change in mass of a 12.5 wt% NaCl draw solution and a 3 wt% NaCl feed solution with respect to time (1 hour), in a larger scale FO flow cell;

Figure 16 depicts a graph outlining a change in mass of a 33 wt% ionized trimethylamine draw solution and a 3 wt% NaCl feed solution with respect to time (1 hour), in a larger scale FO flow cell;

Figure 17 depicts a diagram of a demonstrative, non-limiting example of an equipment set-up for removal of ionized trimethylamine and counterion as draw solute from diluted draw solution, as described and used herein;

Figure 18 depicts a graph outlining a comparison of sparging gases and their efficacy in draw solute removal from a draw solution; and

Figure 19 depicts a diagram of a demonstrative, non-limiting example of a larger scale FO flow cell, as described and used herein;

Table 1A delineates flux (LMH) values, calculated for 1st hour of each run, from a flow cell equipped with a NaCl feed solution, and a 66 wt% ionized trimethylamine draw solution;

Table 1B delineates FT-IR calibration curve data for analysis of trimethylamine;

Table 1C delineates FT-IR calibration curve data for analysis of ionized trimethylamine;

Table 2 delineates reverse salt flux values of wt% trimethylamine present in feed solutions, as calculated by GC-FID, for a flow cell equipped with NaCl feed solutions, and a 66 wt% ionized trimethylamine draw solution;

Table 3 delineates reverse salt flux values of wt% trimethylamine present in feed solutions, as calculated by GC-FID, for a flow cell equipped with NaCl feed solutions, and a 33 wt% ionized trimethylamine draw solution;

Table 4 delineates flux values (LMH), calculated during 1st hour of flow cell operation, for a FO flow cell equipped with an NaCl or NaCl/CaCl$_2$ comprising feed solution (the NaCl/CaCl$_2$ comprising feed solutions indicated by % total dissolved solids; % TDS) at 25 °C;

Table 5 delineates reverse salt flux values of wt% ionized trimethylamine present in feed solutions, as calculated by FT-IR, for a FO flow cell equipped with an NaCl or NaCl/CaCl$_2$-comprising feed solution (the NaCl/CaCl$_2$ comprising feed solutions indicated by % total dissolved solids; % TDS);

Table 6 delineates flux values (LMH), calculated during 1st hour of flow cell operation, for a FO flow cell equipped with 6 wt% TDS feed solution and a 66 wt% ionized trimethylamine draw solution, while varying temperature of the feed solution;

Table 7 delineates reverse salt flux values of wt% ionized trimethylamine present in feed solutions, as calculated by FT-IR, for a FO flow cell equipped with 6 wt% TDS feed solution and a 66 wt% ionized trimethylamine draw solution, while varying temperature of the feed solution;

Table 8 delineates reverse salt flux values of wt% ionized trimethylamine present in feed solutions, as calculated by FT-IR, for a FO flow cell equipped with 6 wt% TDS feed solution and a 66 wt% ionized trimethylamine draw solution, while varying temperature of the feed and draw solution;

Table 9 delineates flux values (LMH), calculated during 1st hour of flow cell operation, for a FO flow cell equipped with 6 wt% TDS feed solution and a 33 wt% ionized trimethylamine draw solution, while varying pH of the feed solution;

Table 10 delineates reverse salt flux values of wt% ionized trimethylamine present in feed solutions, as calculated by FT-IR, for a FO flow cell equipped with 6 wt% TDS feed solution and a 33 wt% ionized trimethylamine draw solution, while varying pH of the feed solution;

Table 11 delineates flux values (LMH), calculated during 1st hour of flow cell operation, and reverse salt flux values of wt% ionized trimethylamine present in feed solutions, as calculated by FT-IR, for a FO flow cell equipped with <1 wt% TDS wastewater feed solution and a 66 wt% ionized trimethylamine draw solution;

Table 12 delineates initial inductively coupled plasma optical emission spectrometry (ICP-OES) analysis from Caducean of mining tailing samples, prior to FO treatment;

Table 13 delineates ICP-OES analysis from Caducean of mining tailing samples following FO treatment in a FO flow cell equipped with a 66 wt% ionized trimethylamine draw solution;

Table 14 delineates flux values (LMH), calculated during 1st hour of flow cell operation, for a FO flow cell equipped with a mining tailings feed solution, and a 66 wt% ionized trimethylamine draw solution;

Table 15 delineates reverse salt flux (reverse salt flux) values of wt% ionized trimethylamine present in feed solutions, as calculated by FT-IR, for a FO flow cell equipped with a mining tailings feed solution and a 66 wt% ionized trimethylamine draw solution, over 48 hours;

Table 16 delineates analysis of select parameters from received concentrated municipal wastewater analysis pre- and post-FO treatment;

Table 17 delineates analysis of select parameters from produced wastewater samples, pre- and post-FO treatment;

Table 18 delineates ICP-OES analysis from Caducean of produced wastewater samples, pre- and post-FO treatment;

Table 19 delineates flux values (LMH), calculated during 1st hour of flow cell operation, for a FO flow cell equipped with a flowback wastewater feed solution, and a 66 wt% ionized trimethylamine draw solution;

Table 20 delineates analysis of select parameters for flowback wastewater pre- and post-FO treatment;

Table 21 delineates ICP-OES analysis of received flowback wastewaters pre- and post-FO treatment;

Table 22 delineates parameters and results of FO treated simulated, and received, feed solutions with ionized TMA draw solutions using a FO flow cell equipped with hollow-fibre module membranes;

Table 23 delineates maximum temperature for carbonation of 50 mL of 45% TMA under various dynamic pressures of carbon dioxide;

Table 24 delineates flux values (LMH), calculated during 1st hour of flow cell operation, and reverse salt flux values of wt% ionized trimethylamine present in feed solutions, as calculated by FT-IR, for a FO flow cell equipped with a 12.5 wt% NaCl draw solution and a 3 wt% NaCl feed solution, in a large scale FO flow cell;

Table 25 delineates a % TDS rejection calculated for FO treated brackish, deoiled, and weak-acid cation exchange-treated process water, as determined by ICP-OES analysis.

DETAILED DESCRIPTION

Unless defined otherwise, all technical and scientific terms used herein have the same meaning as commonly understood by one of ordinary skill in the art to which this invention belongs.
As used in the specification and claims, the singular forms "a", "an" and "the" include plural references unless the context clearly dictates otherwise.
The term "comprising" as used herein will be understood to mean that the list following is non-exhaustive and may or may not include any other additional suitable items, for example one or more further feature(s), component(s) and/or ingredient(s) as appropriate.
The term "switched" means that the physical properties and in particular the ionic strength, have been modified. "Switchable" means able to be converted from a first state with a first set of physical properties (in the present application, this refers to a first state of a given ionic strength) to a second state with a second set of physical properties (i.e., a state of higher ionic strength). A "trigger" is a change of conditions (e.g., introduction or removal of a gas, change in temperature) that causes the change in the physical properties, e.g., ionic strength. The term "reversible" means that the reaction can proceed in either direction (backward or forward) depending on the reaction conditions.
"Carbonated water" or "aqueous $CO_2$" means a solution of water in which $CO_2$ has been dissolved. "$CO_2$ saturated water" means a solution of water in which $CO_2$ is dissolved to the maximum extent at that temperature.
As used herein, "a gas that has substantially no carbon dioxide" means that the gas has insufficient $CO_2$ content to interfere with the removal of $CO_2$ from the solution. For some applications, air may be a gas that has substantially no $CO_2$. Untreated air may be successfully employed, i.e., air in which the $CO_2$ content is unaltered from air that occurs naturally; this would provide a cost saving. For instance, air may be a gas that has substantially no $CO_2$ because in some circumstances, the approximately 0.04% by volume of $CO_2$ present in air is insufficient to maintain an additive in a switched form, such that air can be a trigger used to remove $CO_2$ from a solution and cause switching. Similarly, "a gas that has substantially no $CO_2$, $CS_2$ or COS" has insufficient $CO_2$, $CS_2$ or COS content to interfere with the removal of $CO_2$, $CS_2$ or COS from the solution.
As used herein, "additive" may be used to refer to trimethylamine as it is used in a switchable draw solution for forward osmosis. When an aqueous solution that includes the trimethylamine additive is subjected to a trigger, the additive reversibly switches between two states, a non-ionized state where the nitrogen is trivalent and is uncharged, and an ionized state where the nitrogen is protonated making it a positively charged nitrogen atom. For convenience herein, the uncharged or non-ionic form of the additive is generally not specified, whereas the ionic form is generally specified.

The term "ionized trimethylamine", as used herein, refers to protonated or charged trimethylamine, wherein the trimethylamine has been protonated or rendered charged by exposure to an acid gas, such as but not limited to $CO_2$, COS, and/or $CS_2$, in the presence of water/aqueous solution.

The ionized form of trimethylamine is also herein referred to as an "ammonium salt". When the ionized trimethylamine is formed by exposure to the acid gas $CO_2$ in the presence of water or an aqueous solution, the ionic form of trimethylamine comprises both carbonates and bicarbonates. Consequently, although the draw solution is referred to herein as an ionized trimethylamine, it should be understood that, when the ionizing trigger is $CO_2$, the draw solution will contain a mixture of carbonate and bicarbonate salts of the ionized trimethylamine. Although carbonic acid ($CO_2$ in water/aqueous solution) is mentioned and is used in the examples provided in this application, the nitrogen of trimethylamine would also be protonated by $CS_2$ in water/aqueous solution and COS in water/aqueous solution. As such, this term is intended to denote the nitrogen's basicity and it is not meant to imply which of the three exemplary trigger gases ($CO_2$, $CS_2$ or COS) is used.

As would be readily appreciated by a worker skilled in the art, since few protonation reactions proceed to completion, when the trimethylamine additive is referred to herein as being "protonated" it means that all, or only the majority, of the molecules of the compound are protonated. For example, more than about 90%, or more than about 95%, or about 95%, of the molecules are protonated by carbonic acid.

"Ionic" means containing or involving or occurring in the form of positively or negatively charged ions, i.e., charged moieties. "Nonionic" means comprising substantially of molecules with no formal charges. Nonionic does not imply that there are no ions of any kind, but rather that a substantial amount of basic nitrogens are in an unprotonated state. "Salts" as used herein are compounds with no net charge formed from positively and negatively charged ions.

"Ionic strength" of a solution is a measure of the concentration of ions in the solution. Ionic compounds (i.e., salts), which dissolve in water will dissociate into ions, increasing the ionic strength of a solution. The total concentration of dissolved ions in a solution will affect important properties of the solution such as the dissociation or solubility of different compounds. The ionic strength, I, of a solution is a function of the concentration of all ions present in the solution and is typically given by the equation (A),

$$I = \frac{1}{2}\sum_{i=1}^{n} c_i z_i^2 \qquad (A)$$

in which $c_i$ is the molar concentration of ion i in mol/dm3, $z_i$ is the charge number of that ion and the sum is taken over all ions dissolved in the solution. In non-ideal solutions, volumes are not additive such that it is preferable to calculate the ionic strength in terms of molality (mol/kg $H_2O$), such that ionic strength can be given by equation (B),

$$I = \frac{1}{2}\sum_{i=1}^{n} m_i z_i^2 \qquad (B)$$

in which $m_i$ is the molality of ion i in mol/kg $H_2O$, and $z_i$ is as defined for equation (A).

The term "ICP-OES" is used herein to refer to inductively coupled plasma optical emission spectrometry, which is a technique used for the detection of trace metals.

As used herein, when referring to wastewater from hydraulic fracturing (or "tracking"), the term "flowback water" refers to the water that returns to the surface after the hydraulic fracturing procedure is completed and the pressure is released. This water includes salts, gelling agents and excess proppant that flows up through the wellbore to the surface after pressure release. Following completion of the drilling and fracturing, water is produced along with the natural gas; some of which is returned fracturing fluid and some of which is natural formation water; this combination is referred to as "produced water".

As used herein, "acidic" refers to a pH of <7; for example: a pH between <7- 6; or a pH ≤ 6; or, alternatively, ≤ 5; or, alternatively, ≤ 3. As used herein "basic" refers to a pH of >7; for example: a pH between >7 - 8; or a pH ≥ 8; or, alternatively, ≥ 9; or, alternatively, ≥ 11. As used herein, 'highly acidic' refers to a pH ≤3; and, as used herein, 'highly basic' refers to a pH ≥11.

**[0067]** ; As used herein, "organic content" refers to carbon-based constituents of a feed solution, such as, but not limited to organic compounds (e.g., hydrocarbons, alcohols, esters, fatty acids, organic acids, etc.), proteins, carbohydrates, polysaccharides, plant matter, algae, viruses, biological cells, etc., or any combination thereof.

The present application provides a system (or apparatus) and process for forward osmosis. The system and process are useful in treatment of typically hard to treat, or hard to dewater, feed streams; such as, for example, salty water having high total dissolved solids (TDS). The system can also be used for the production of freshwater by desalination of seawater, or brackish water. The system and process is useful for partial dewatering of wastewater, process water, or other industrial aqueous solutions (whether waste or in a process). The osmosis concentrates the wastewater/process water/industrial aqueous solution and produces a purified water stream that can be directly recycled or disposed of, or further purified or processed for recycling or disposal. In one embodiment, the purified water stream comprises ≤3.5 wt% total dissolved solids (TDS). In another embodiment, the purified water stream comprises ≤1 wt% TDS; and, in yet another embodiment, the purified water stream comprises ≤0.5 wt% TDS. In one embodiment, the purified water stream undergoes additional treatment and/or polishing to further reduce the weight percent of total dissolved solids to a concentration suitable for the purified water stream's end use.

As noted above, ionized trimethylamine has been used successfully in a draw solution for forward osmosis (see, for example, International PCT application PCT/CA2011/050777, which is incorporated by reference herein). It has now been found that high concentrations of ionized trimethylamine (i.e., >20-30% by weight) can be used as an effective draw solute component in forward osmosis treatment of high TDS wastewater. The term "high TDS" is used herein to refer to concentrations of dissolved solids that are higher than seawater (which is approximately 3% or 3.5% by weight). These feed streams are difficult to treat since current technologies, such as reverse osmosis, are not able to dewater feed streams at salt concentrations beyond approximately 3%. Other technologies, such as crystallization or distillation, are available, but, as described above, they employ large amounts of energy, which is costly and potentially environmentally harmful.

The forward osmosis apparatus of the present application refers to any apparatus that conducts separation, concentration, filtration, and the like by a forward osmosis process. Accordingly, the forward osmosis apparatus is one that is useful for performing a method of artificially generating an osmotic pressure differential between a draw solution of high osmotic pressure and a feed stream of lower osmotic pressure (in relation to the draw solution) to cause water to migrate from the feed stream to dilute the draw solution. The product of the forward osmosis apparatus or process can be the water produced from dilution of the draw solution, or the resultant concentrated feed stream, or both.

In one exemplary embodiment, the present forward osmosis apparatus and process is useful for partial dewatering of wastewater (such as, but not limited to produced water or flowback water from tracking, municipal wastewater, industrial wastewater, mining wastewater), process water or other industrial aqueous solutions (whether waste or in a process). The osmosis concentrates the input wastewater/process water/industrial aqueous feed stream and produces a purified or partially purified water stream that can be directly recycled or disposed of, or further purified, polished or processed for recycling or disposal. Optionally, the purified water is further purified or polished in order to produce potable water, or agricultural water or other purified water having physical characteristics (such as salt concentration levels) as set or prescribed by it's ultimate use (e.g., environmental regulations). In some alternatives the resulting concentrated feed stream can be used as product or further treated to isolate useful components.

In a particular embodiment, the present forward osmosis apparatus, or system, consists essentially of a concentrated draw solution in communication with a semi-permeable membrane configured for contact with an input feed stream. The apparatus can comprise various means for receiving the input feed stream and for flowing the feed stream over or across the semi-permeable membrane in order to facilitate movement of water from the feed stream, through the membrane and into the draw solution.

Concentrated Draw Solution

The concentrated draw solution used in the present forward osmosis apparatus, or system, and process, comprises a draw solute, which is ionized TMA and a counterion, at a concentration suitable to provide an osmotic pressure that is higher than that of the feed stream to be treated or dewatered. The counterion is selected based on its solubility in water in its ionized, or charged, form and its ability to convert into an uncharged form that is readily removed from water and converted back to its charged form for reformation of the draw solute. Preferably, the uncharged form of the counterion is volatile at ambient temperature, or lower, allowing it to readily separate from water in the dilute draw solution formed from the forward osmosis process.

In certain embodiments, the counterion is formed from an acid gas, such as $CO_2$, $CS_2$ or COS. Preferably the acid gas used to generate the counterion is $CO_2$. In this case the draw solute comprises ionized TMA and a carbonate counterion, a bicarbonate counterion, or a mixture of carbonate and bicarbonate counterions.

The concentration of the draw solute in the concentrated draw solution is at least 20% by weight. Alternatively, the concentration of the draw solute is at least 30% by weight, or from about 20% to about 75% by weight, or from about 30% to about 70% by weight. In certain embodiments, the concentration of the draw solute in the concentrated draw solution is approximately 30% by weight or approximately 67% by weight. Selection of the appropriate concentration of the draw solute is based, in part, on the total dissolved solid ("TDS") concentration of the feed stream. Other factors that are taken into consideration in determining the concentration of the draw solute in the concentrated draw solution include, for example, the desired flux rate across the membrane, the operating temperature of the system, and the operating pressure of the system.

Feed Stream

The present forward osmosis apparatus and process is particularly useful in the treatment, or dewatering, of typically difficult to treat feed streams. Such feed streams include, but are not limited to, those characterized by high TDS, high acidity or high basicity, low temperature, presence of organic content, and/or presence of suspended solids. In particular embodiments, the forward osmosis apparatus and process is useful in the treatment of feed streams: comprising ≥5wt% total dissolved solids; at a temperature of ≤20°C or at a temperature between ≥30°C - ≤50°C; having a highly acidic pH or a basic pH; comprising organic content; and/or comprising suspended solids.

As shown in the Examples below, the present forward osmosis apparatus and system is effective in treating or dewatering feed streams, using a concentrated draw solution, that are high in total dissolved solids. This is in spite of the anticipated difficulty, for example, from increased viscosity, in using a draw solution comprising 20% or greater, by weight, of the draw solute. Exemplary results are summarized in the table below in comparison to the previously employed TMA-based forward osmosis systems:

Forward Osmosis Comparison Using Ionized TMA Draw Solution

|  | Present FO System | Elimelech et al. | Ikeda et al. |
|---|---|---|---|
| Draw Solution (DS) Conc. (wt% Ionized TMA) | 66.2 and 33.1 | 11.08 | 25.3, 17.4, and 10.3[a] |
| Feed Solution (FS) Conc. (wt%) | 0.075-25 (NaCl) 0.26-10 (TDS[b]) | DI Water | 0.1 (BSA) 3.43 (NaCl) |
| Membrane | TCM-1 | HTI-TFC HTI-CTA | HTI |
| Temp | 3-5 20-22 30-35 | 25 | Not stated (Assumed to be 25) |
| Reported Values (Flux, Reverse Solute Flux) | Numerical values | Numerical values and Bar Charts | Range (less than/more than) |
| Velocity (cm/s) | 25.77[c] | 17.1 | 2 |
| Flow type | Counter current or cross- flow | Cross-flow | Parallel |

(continued)

| | Present FO System | Elimelech et al. | Ikeda et al. |
|---|---|---|---|
| Water Flux (LMH) | For 66.2 wt% DS<br><br>35 (0.075% TDS[d])<br>36 (0.078% TDS[d])<br>33.6 (0.26% TDS[d])<br>26.1 (3% NaCl)<br>20.4 (6% NaCl)<br>17.3 (6% TDS)<br>18 (7% NaCl)<br>15.2 (9% NaCl)<br>15.0 (10% TDS)<br>11.0 (15% NaCl)<br>9.0 (18% NaCl)<br>4.0 (25% NaCl)<br><br>Temperature effect<br><br>13.7 (6% TDS, 3-5°C)<br>17.3 (6% TDS, 20-22°C)<br>27.7 (6% TDS, 30-35°C)<br><br>For 33.1 wt% DS<br><br>27 (0.075% TDS[d])<br>32 (0.0775% TDS[d])<br>27.4 (0.26% TDS[d])<br>20.0 (3% NaCl)<br>11.0 (6% TDS)<br>11 (7% NaCl)<br>8 (9% NaCl)<br>6.4 (10% TDS)<br><br>pH effect<br>12.9 (6% TDS, pH 3)<br>12.8 (6% TDS, pH 5)<br>11.0 (6% TDS, pH 6.5)<br>11.8 (6% TDS, pH 8)<br>14.7 (6% TDS, pH 10) | 14.5 (TFC) ~11 (CTA) | >5.4 (25.3 and 17.4%) 0.54-5.4 (10.3%) |

(continued)

|  | Present FO System | Elimelech et al. | Ikeda et al. |
|---|---|---|---|
| Reverse Solute Flux (mol/m$^2$.hr) | 0.01-0.3[e] | 0.1 | <0.1 (25.3 and 10.7%) 0.1-0.5 (17.4%) |
| [a] For Fujifilm's CDS, although the TMA:$CO_2$ molar ratio is 1:0.71 (TMA is in excess), which indicates the possibility of having $CO_3^{2-}$, it is assumed that the draw solution exists mainly as TMAH-$HCO_3$ when performing the unit conversion; [b] TDS comprises of 97 wt% NaCl and 3 wt% $CaCl_2$; [c] This number changes depending on the membrane element and flow rate of liquid; [d] Oil & gas process water TDS consisted primarily of NaCl [e] Depending on feed and drawsolution combination | | | |

Of particular value, the present forward osmosis system and process is useful in treating complex wastestreams with minimal or no pre-treatment. These complex waste streams are characterized by high TDS concentrations and the presence of other components including, for example, suspended solids and/or organic material (e.g., organic compounds, bacteria and the like).

Membrane

The herein described forward osmosis apparatus, or system, and process, comprises a semi-permeable membrane, which is permeable to water. The semi-permeable membrane is impermeable or minimally permeable to salts. As is known in the field, various materials can be used to manufacture the semi-permeable membrane and there are commercially available membranes suitable for use in the present apparatus and process. The selection of the appropriate membrane will depend, in part, on the nature of the input feed stream and/or the required characteristics of the purified water output.

In one embodiment, the semi-permeable membrane comprises a pH tolerance within a pH range of 0 - 14; in another embodiment, the semi-permeable membrane comprises a pH tolerance within a pH range of 2 - 13. In one embodiment, the semi-permeable membrane comprises a flux of ≥33 LMH when the feed solution is deionized water, and the draw solution has a solute concentration of 3 wt%; in another embodiment, the semi-permeable membrane comprises a flux of ≤33 LMH when the feed solution is deionized water, and the draw solution has a solute concentration of 3 wt%.

In one embodiment, the semi-permeable membrane comprises a reverse salt flux of ≤0.1 mol/m$^2$h; in another embodiment, the semi-permeable membrane comprises a reverse salt flux of ≥0.1 mol/m$^2$h. In one embodiment, the semi-permeable membrane comprises a TDS rejection of ≥80 %; or, alternatively, between 94 - 99.9%; or, alternatively, ≥99.9%.

In another embodiment, the semi-permeable membrane comprises a feed solution temperature tolerance within a range of -10 - 70°C; in another embodiment, the semi-permeable membrane comprises a feed solution temperature tolerance within a range of 0-60°C; or, alternatively, within a range of 3 - 50°C; or, alternatively, within a range of 3 - 35°C.

As demonstrated in these results and the additional results in the Examples below, the present system is particularly useful in treating typically hard to treat feed streams using forward osmosis.

To gain a better understanding of the invention described herein, the following examples are set forth. It should be understood that these examples are for illustrative purposes only. Therefore, they should not limit the scope of this invention in any way.

EXAMPLES

EXAMPLE 1: Forward Osmosis with NaCl Feed Solutions

Materials: Trimethylamine was purchased as an approximately 40 - 45 wt% solution in water, and used as received from Sigma Aldrich. Coleman instrument grade carbon dioxide (99.99%) was purchased from Air Liquide. Deionized water (18 MΩ-cm) was provided using an Elga Purelab Pulse system. Stock feed solutions of sodium chloride at given concentrations were prepared in advance by dissolving sodium chloride in deionized water. Thin-film composite membranes (TCMs) were acquired from three different commercial membrane suppliers, each of varying thickness: 0.07 mm (TCM-1); 0.15 mm (TCM-2); and 0.09 mm (TCM-3). Membranes were cut for testing (4 cm diameter), and conditioned by soaking in deionized water for a minimum of 30 minutes before use. Once wet, all membranes were stored in deionized water for the duration of testing.

Solutions: Stock draw solutions of approximately 66 wt% ionized trimethylamine were generated by carbonating 50 mL of aqueous trimethylamine in 75 mL high pressure gas reactors, at a pressure of 9 bar of carbon dioxide, using a 5000 Multiple Reactor System from Parr Instrument Company.

It is noted that, as the herein and below described stock draw solutions are generated from a purchased aqueous TMA solution with an approximate concentration of 40 - 45 wt%, all herein reported ionized TMA concentrations are also approximate, and may vary by approximately 5 wt%, depending on the concentration of the aqueous TMA solution.

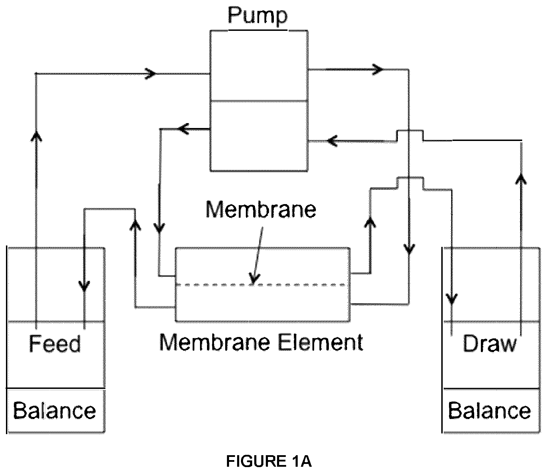

Equipment and Analysis: The forward osmosis flow cell used for this, and other experiments, is depicted by Figure 1A. The flow cell comprised: (i) a pump to circulate feed and draw solutions; (ii) a membrane cartridge through which the solutions are circulated; (iii) separate reservoirs containing the feed and draw solutions; (iv) separate balances, upon which the reservoirs were placed, to measure mass changes with time; and, (v) connective tubing throughout.

Within the FO flow cell, as depicted in Figure 1A, the feed solution was circulated from the feed reservoir, through the pump, over the active/rejection side of the membrane, and back into the feed reservoir; the draw solution was simultaneously circulated from the draw reservoir, through the pump, over the support side of the membrane, and back into the draw reservoir; as the feed and draw solutions simultaneously passed over the membrane, water transferred from the feed solution across the membrane and into the draw solution; and, the reservoirs sat atop balances to record mass change of the solutions with time, via a computer. For each flow cell run, the mass change data were collected using Mettler Toledo PG2002-S balances, coupled to a computer with LabVIEW2012 software (National Instruments).

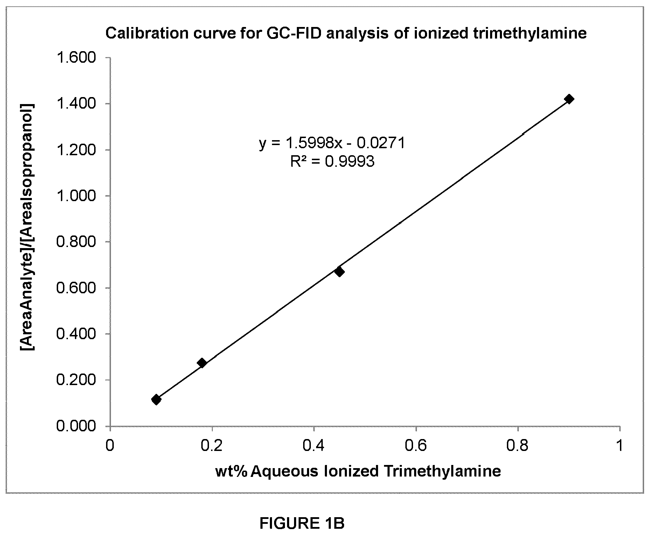

GC-FID chromatograms were collected using a Varian 450-GC coupled to a FID detector, equipped with an Agilent CP-volamine column (30m × 0.32mm ID). The temperature profile for GC analysis was an initial temperature of 75°C held for 10 minutes followed by ramping at 5°C/min to 95°C and holding for 2 minutes. Helium was used as the carrier gas at 5 mL/min with an injection split ratio of 20:1. Isopropanol was used as an internal standard for quantification. Aqueous feed solution samples for GC-FID analysis were made by combining 1 mL of solution, with 10 μL of isopropanol and diluting to 10 mL with methanol, in a 10 mL volumetric flask. Ionized trimethylamine quantification was carried out by integrating area of the trimethylamine peak and isopropanol peak, then comparing to the calibration curve shown in Figure 1B.

Volumes: Please note that volumes of respective solutions were varied only to ensure immersion of tubing required to facilitate solution flow throughout the forward osmosis flow cell; or, to allow for the flow cell to be run for a longer time period.

Flux Calculations: Flux was calculated using the following equation:

$$\text{Flux} = [\text{Volume of water drawn across the membrane (L)}] / [\text{Area of Membrane (m}^2\text{)}] / [\text{Unit of Time (h)}]$$

Flux values were always measured over, and reported for, the first hour of operation. FO flow runs were often left to circulate for longer than 1 hour in order to determine membrane stability with time, changes in reverse salt flux with time, and overall % reduction in feed solution.

A spreadsheet, provided by the manufacturer of TCM-1, was used to facilitate calculation. Other options for calculating include graphing mass changes of a feed or draw solution with respect to time, dividing the mass change slope by membrane area, and converting units to $L/m^2/h$.

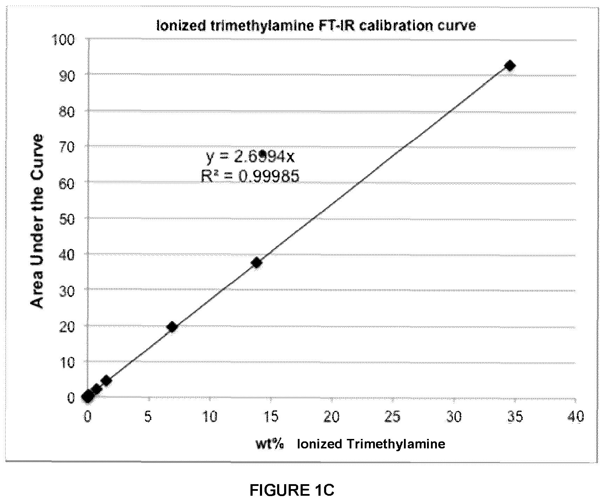

Ionized trimethylamine FT-IR Calibration: To develop a Fourier-Transform Infrared (FT-IR) calibration curve to analyze ionized trimethylamine, approximately 2 drops of each standard solution of varying concentration was deposited onto an ATR-FT-IR sensor (Agilent Cary 630 Ft-IR). A water spectrum was subtracted from the resulting spectrum. Area under curve, from 1440 to 1300 $cm^{-1}$ centered at 1365 $cm^{-1}$, was recorded and a calibration curve was generated to provide the equation (see Table 1C and Figure 1C):

$$\text{wt\% ionized trimethylamine} = [\text{Area}]/2.6994$$

Representative Flow Cell Procedure for Forward Osmosis Under Aerobic Conditions: Conditioned membranes were loaded into a flow cell with the membrane's active/rejection layer orientated towards the feed solution. The cell was flushed with 3x100 mL portions of deionized water on both the feed and draw solution sides of the membrane. Glass bottles (250 mL) were used as reservoirs for the feed solution and draw solution. To run the cell under aerobic conditions, the bottles were left opened to air. Stock feed solutions of sodium chloride (3, 9 and 15 wt%) and 66 wt% ionized trimethylamine were prepared and used, as described above. Repeat runs were performed for each membrane at each salt concentration (two runs per feed/draw solution combination). A complete run was determined by length of time; some initial runs were 3 hours, while others were 6 hours.

Salt solution (200 mL) was loaded into the feed solution bottle, and aqueous 66 wt% ionized trimethylamine (100 mL) was loaded into the draw solution bottle. Tubing was lowered into each solution so that it did not touch the sides or bottom of the bottles. Data collection was initiated on the LabView software, followed by starting a circulating pump and timer. After 30 seconds, the balances were tared and any data points before this time were removed from analysis. On an hourly basis, the pump was stopped and a sample was taken from the feed solution, by syringe, for GC-FID (1 mL) or FT-IR analysis (<0.2 mL).

Representative Flow Cell Procedure for Forward Osmosis Under Carbon Dioxide Environment: Conditioned membranes were loaded into the flow cell with the active/rejection layer orientated towards the feed solution. The cell was flushed with 3-100 mL portions of deionized water on both the feed and draw solution sides. 250 mL glass bottles were used as reservoirs for the feed solution and draw solution. Stock solutions of sodium chloride (3, 9 and 15 wt%) and 66 wt% ionized trimethylamine were prepared and used, as described above. Repeat runs were done for each membrane at each salt concentration.

To place the cell under constant $CO_2$ atmosphere, caps for the 250 mL bottles were made with a Teflon liner. Holes were punctured though the liner to allow tubing to be passed through the liner and into the solutions. A gas manifold, with three lines, was used to flow $CO_2$ through a needle into each bottle, and out of each bottle via a bubbler. Check valves were placed on each line to ensure that gaseous trimethylamine did not flow back through the lines and contaminate the $CO_2$. Each bottle was purged with $CO_2$ for several seconds before each run, with the tubing immersed in the solutions.

200 mL of salt solution was loaded into the feed solution bottle, and 100 mL of aqueous 66 wt% ionized trimethylamine was loaded into the draw solution bottle. Tubing was lowered into each solution so that it did not touch the sides or bottom of the bottles. Data collection was initiated on the LabView software, followed by starting the circulating pump and timer. After 30 seconds, the balances were tared, and any data points before this time were removed from analysis. On an hourly basis, the pump was stopped and a sample was taken from the feed solution, by syringe, for GC-FID (1 mL) or FT-IR analysis (<0.2 mL).

Results and Discussion: A forward osmosis system was investigated employing a flow cell equipped with stock NaCl feed solutions, ionized trimethylamine draw solutions, and membranes from three commercial suppliers (membranes TCM-1, TCM-2, and TCM-3). See Table 1.

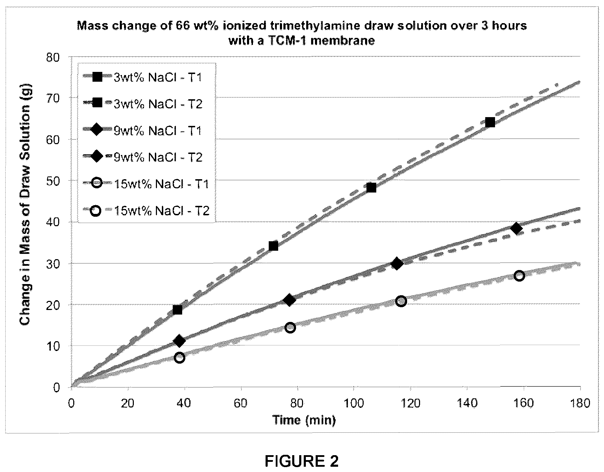

As outlined in Table 1, a flux of 26 L/m$^2$h (LMH) was measured from a flow cell equipped with a TCM-1 membrane, a feed solution of 3 wt% NaCl, and a draw solution of 66 wt% ionized trimethylamine. It was observed that the flux value of 26 LMH was comparable to reported reverse osmosis (RO) seawater desalination flux values (30-40 LMH); taking into consideration that 55-80 bar of pressure is generally required for RO systems, and the FO system herein described was operating at an ambient pressure of ~ 1 bar. As expected, flux values, as calculated over the first 60 minutes of each run, decreased as salinity of feed solution increased (see Figure 2). High salinity feed solutions of 18 wt% sodium chloride and brine were also treated using a FO flow cell equipped with a TCM-1 membrane. Flux across the membrane from the feed solution to the draw solution was observed at a value of 9.1 LMH and 4.6 LMH for 18 wt% NaCl and brine, respectively. This suggested that the herein described FO systems may be applicable to dewatering solutions with high salinity.

The amount of ionized trimethylamine that crossed the membrane from the draw solution into the feed solution, referred to as reverse salt flux, was determined by GC-FID or FT-IR analysis by either testing for the presence of free trimethylamine (TMA) with GC-FID, or ionized TMA with FT-IR; see Table 2. The draw solute reverse salt flux was generally small, with <1% ionized trimethylamine as draw solute migrating across the membrane into the feed solution.

It was observed that, when using TCM-2 or TCM-3 membranes, flux was generally lower and reverse salt flux of draw solute was generally higher. Without wishing to be bound by theory, it was considered that this was indicative of the TCM-1 membrane's stability being relatively higher than that of the TCM-2 or TCM-3 membranes. Nonetheless, in each case effective FO was observed in that there was significant concentration of the feed solution.

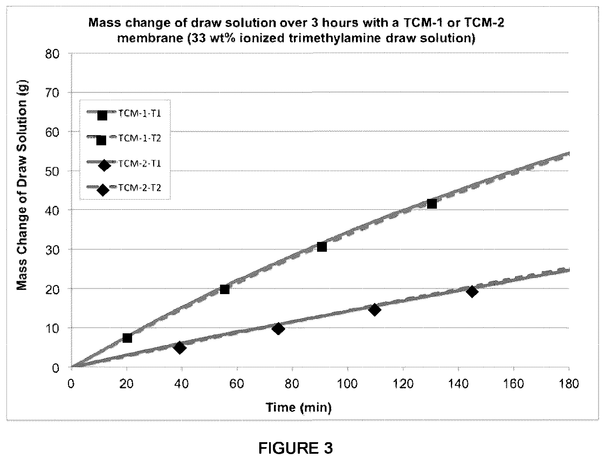

An approximately 33 wt% ionized trimethylamine solution was evaluated for use as a FO draw solution; it was postulated that a reduced concentration of draw solute may provide a benefit of less draw solute needing to be removed following a forward osmosis process. Thus, a flow cell was equipped and run with a TCM-1 or a TCM-2 membrane, respectively, a 3 wt% NaCl feed solution, and a 33 wt% ionized trimethylamine draw solution (see Figure 3).

It was observed that, for the flow cell equipped with the TCM-1 membrane, the flux measured did not significantly decrease with dilution of the draw solution; for example: 26.1 LMH flux with 66 wt% draw solution; versus 20.0 LMH flux with 33 wt% draw solution. Further, it was observed that % reverse salt flux remained low, at <0.5% (see Table 3).

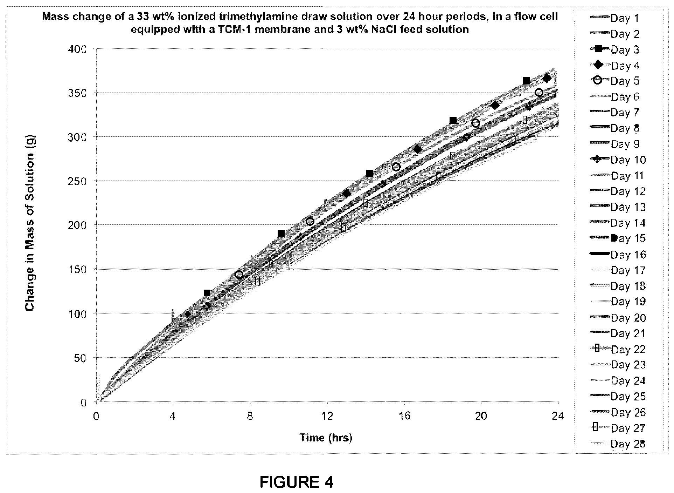

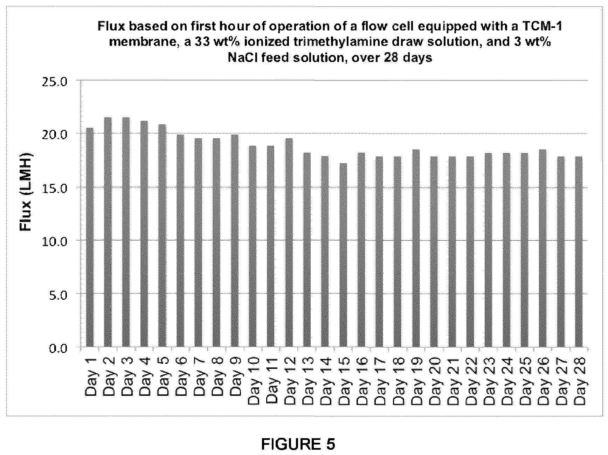

A FO flow cell, equipped with a TCM-1 membrane, a 3 wt% NaCl feed solution, and a 33 wt% ionized trimethylamine draw solution, was run for 28 consecutive days to investigate the long term performance stability of the system. Both the feed solution and draw solution were refreshed every 24 hours, while the membrane was not changed. Mass change of the feed and draw solution was constantly monitored, the mass changes of which were plotted against time, revealing a fairly consistent trend over the course of 28 days (see Figure 4). On average, the flux value recorded for the system was 18.9 LMH; a substantial decrease in flux over 28 days was not observed (see Figure 5).

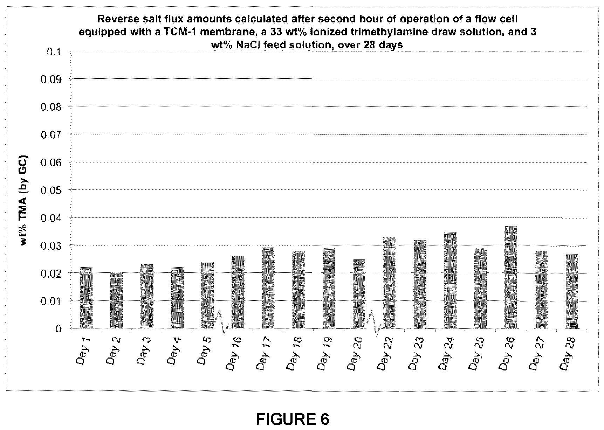

Amount of reverse salt flux of the draw solute into the feed solution, after two hours of operation, was determined by GC-FID analysis (see Figure 6). Over the 28 days, the reverse salt flux amount at each time interval remained largely unchanged (average 0.028 wt% or 280 ppm); as such, it was postulated that little to no membrane degradation was occurring.

EXAMPLE 2: Forward Osmosis with Waste Water

Waste water is defined by the United States Environmental Protection Agency as any water which, during manufacturing or processing, comes into direct contact with or results from the production or use of any raw material, intermediate product, finished product, byproduct, or waste product; consequently, waste water, or process water, can vary in composition depending on the source. Generally, process water contains a higher concentration of total dissolved solids (TDS), and organic content, than seawater. To simulate process water as a feed solution, high TDS solutions were prepared by incorporating a divalent salt, calcium chloride. A ratio of NaCl to $CaCl_2$ was set at 97:3, such that the 6 wt% TDS feed solution comprised 5.82% NaCl and 0.18% $CaCl_2$, and the 10 wt% TDS feed solution comprised 9.7% NaCl and 0.3% $CaCl_2$.

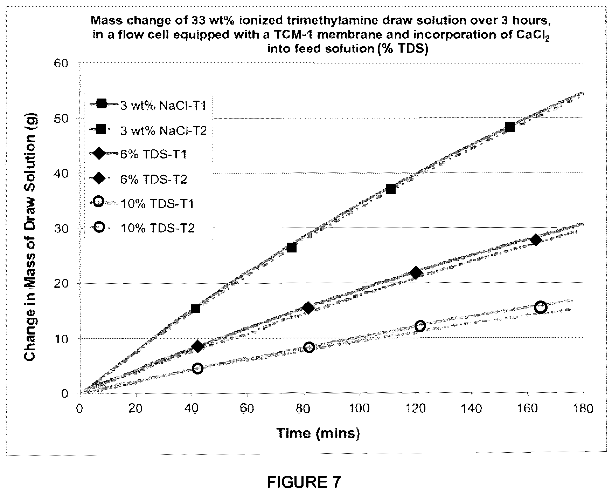

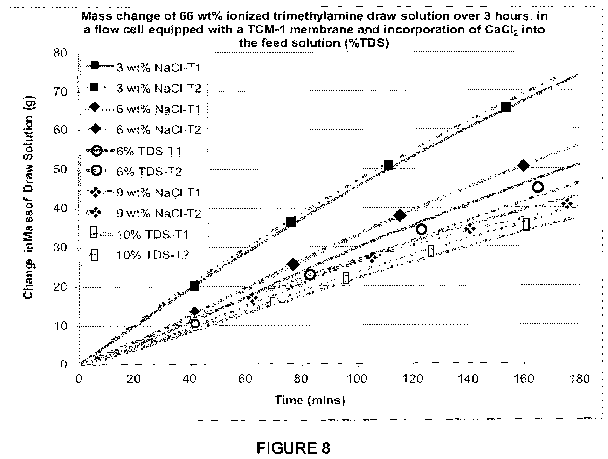

Both 6% TDS and 10% TDS feed solutions were used in a forward osmosis flow cell with 33 wt% and 66 wt% ionized trimethylamine draw solutions (Figures 7 and 8).

Experimental: Stock solutions of approximately 66 wt% ionized trimethylamine were produced by carbonating 2 L portions of a 45 wt% aqueous trimethylamine solution in a 1 gallon stainless steel Chemineer reactor, at 10 bar for 30 minutes. The resulting stock solution is referred to as the "concentrated draw solution." Solutions of 33 wt% ionized trimethylamine were produced by diluting the concentrated draw solution by half. Stock feed solutions comprising 6% total dissolved solids (5.82 % sodium chloride; 0.18 % calcium chloride; 94% deionized water) and 10% total dissolved solids (9.7% sodium chloride; 0.3% calcium chloride; 90% deionized water) were prepared by dissolving the requisite amount of salt into the appropriate amount of deionized water.

Conditioned TCM-1 membranes were loaded into a flow cell with the active/rejection layer orientated towards the feed solution. The cell was flushed with 3x100 mL portions of deionized water on both the feed and draw solution sides of the membrane. Glass bottles (250 mL) were used as reservoirs to contain the feed solution and draw solution. Duplicate runs of 3 hours were completed for each feed/draw combination.

High TDS salt solution (200 mL) was loaded into the feed solution bottle, and draw solution (100 mL) was loaded into the draw solution bottle. Tubing was lowered into each solution so that it did not touch the sides or bottom of the solution-containing bottles. Data collection was initiated on the LabView software, followed by starting a circulating pump and timer. After 30 seconds, the balances upon which the solution bottles were placed were tared, and any data points collected before this time were removed from analysis (See Example 1; Figure 1A). On an hourly basis, the pump was stopped and a sample was taken from the feed solution, by syringe, for reverse salt flux analysis. Reverse salt flux amounts were determined by FT-IR analysis using a Cary 630 FT-IR spectrometer purchased from Agilent Technologies; data analysis was performed with MicroLab software (see Example 1; Figure 1C) using a calibration curve prepared with known amounts of trimethylamine salt.

Results and Discussion: The calcium ions were incorporated into the stock feed solutions to simulate actual process wastewater, since such water is known to contain divalent salts, such as calcium salts. It is known, however, that calcium can lead to lime scale formation in FO systems, which could also contribute to membrane failure. It was also postulated that, with respect to the herein described FO system, introduction of calcium ions could cause a flux decrease due to their being divalent cations: ion-ion interactions and hydration spheres of such divalent species can be different from those that occur within monovalent systems (e.g., NaCl).

As shown in Table 4, a flux of 17 LMH was achieved in a flow cell equipped with a TCM-1 membrane, a 66 wt% ionized trimethylamine draw solution, and a 6 wt% TDS feed solution. It was observed that flux did not significantly decrease when a 10 wt% TDS feed solution was in the flow cell (15.0 LMH). As expected, the observed flux from the 33 wt% draw solution was overall lower than for the 66 wt% solution, given the draw solution's lower ionic strength.

It was observed that the flux for the 6 wt% TDS feed solution was slightly lower than that observed for a 6 wt% NaCl system: 17 LMH versus 20 LMH, with a 66 wt% draw solution. This was expected since addition of $CaCl_2$ generates three ionic species in solution ($1{\times}Ca^+$; $2{\times}Cl^-$), such that this feed solution had an ionic strength that was higher than that of an equivalent weight percent NaCl feed solution, and, consequently there was less difference between the ionic strength of the feed solution and the draw solution.

As depicted in Figures 7 and 8, the rate at which the draw solution increased in mass during dewatering of the feed solution by FO decreased as the feed solution's salt concentration increased (please note: previously described results for 3, 6 and/or 9 wt% NaCl feed solutions are included in Figures 7 and 8 for comparison).

Reverse salt flux of draw solute into the feed solution was monitored hourly by FT-IR spectroscopy (see Table 5). It was observed that a greater degree of reverse salt flux occurred when higher concentration draw solutions were used (66 wt% versus 33 wt%). It was postulated that this was due to less amine interacting with the flow cell's membrane as a consequence of the draw solution's dilute nature, thus decreasing reverse salt flux potential. Further, it was observed that, as the feed solution's TDS increased, the amount of draw solute reverse salt flux decreased; for example, after 180 min, a 0.064 wt% reverse salt flux was observed for a flow cell equipped with a 6 wt% TDS feed solution and 66 wt% draw solution; as compared to 0.024 wt% for a flow cell equipped with a 10 wt% TDS feed solution and 66 wt% draw solution (see Table 5). It was postulated that this was due to an increase in the feed solution's ionic strength, thus interfering with draw solute cross flow.

Overall, it was observed that incorporation of $CaCl_2$ into feed solutions of the herein described FO flow cells did not result in a significant decrease in flux values, as measured for systems using a 66 wt% ionized trimethylamine draw solution. Further, there were no significant lime scale deposits observed within the FO flow cell over the course of each run. The use of the higher concentration draw solution in the FO system successfully dewatered the simulated process water samples.

EXAMPLE 3: Variation in Temperature of Feed Solution

It is understood that a feed solution's temperature will be dependent on a number of factors, including, for example, the geographical region in which a FO flow cell is deployed, the source of the feed stream (e.g., industrial process water may be at a higher or lower temperature depending on the process), and pre-treatment steps prior to introduction of the feed solution into a FO flow cell. In order to evaluate any temperature effects on the FO flow cell as herein described, comprising an ionized trimethylamine draw solution, the feed solution's temperature was varied; and, separately, the temperature of both the feed solution and draw solution was varied.

To investigate the effect of temperature, a flow cell was equipped with an ionized trimethylamine draw solution, a high TDS feed solution, a TCM-1 membrane having a maximum recommended operating temperature of 45°C. Consequently, temperature minima and maxima were set to 3 to 5°C and 30 to 35°C, respectively.

Experimental: Stock draw solutions comprising 66 wt% ionized trimethylamine, and stock feed solutions comprising 6 wt% total dissolved solids (5.82 % sodium chloride and 0.18 % calcium chloride) were prepared as described above.

The membrane was conditioned as described above, and loaded into a flow cell with the active/rejection layer orientated towards the feed solution. The system was flushed with deionized water on both the feed and draw solution sides of the membrane. Jacketed beakers (500 mL) were used as reservoirs for the feed solution and draw solution. Temperature control was achieved by attaching a heater/chiller to the jacketed beaker, and running a coil through the feed and draw solutions. Solutions were allowed to equilibrate at the desired temperature for 30 minutes prior to the start of an FO run. Repeat runs were done for each temperature value.

Salt solution (250 mL) was loaded into the feed solution reservoir, and aqueous 66 wt% ionized trimethylamine (150 mL) were loaded into the draw solution reservoir. Tubing was lowered into each solution so that it did not touch the sides or bottom of the reservoir. Data collection was initiated on the LabView software, followed by starting the circulating pump and timer. After 30 seconds, the balances upon which the solutions were positioned were tarred, and any data points before this time were removed from analysis (See Example 1; Figure 1A). On an hourly basis, the pump was stopped, and a sample was taken from the feed solution, by syringe, for reverse salt flux analysis. Reverse salt flux amounts were determined by FT-IR analysis using a Cary 630 FT-IR spectrometer purchased from Agilent Technologies; data analysis was performed with MicroLab software (see Example 1; Figure 1C).

Results and Discussion: The TCM-1 membrane's recommended operating temperatures were up to 45°C; further, once the membranes were wet, they were not allowed to freeze. To prevent degradation of the chosen membrane from affecting the overall results, the temperature ranges for the draw and/or feed solutions were selected to be between 3 to 5°C and 30 to 35°C.

Initial experiments comprised varying only the feed solution's temperature; later experiments varied both the feed and draw solution temperatures. At higher temperatures, it was expected that there would be better solute dissolution and mixing at the membrane for the feed and draw solution. It was postulated that this would reduce formation of internal concentration polarizations at the membrane surface, and/or within the membrane itself, potentially resulting in higher flux values. Concentration polarizations result from a build up of concentration gradients, in or around the membrane: either internal concentration polarization (ICP) or external concentration polarization (ECP). They decrease the effective osmotic pressure difference across the membrane, which means lower flux. Further, at lower temperatures, $CO_2$ solubility increases; consequently, it was expected that lower temperatures would facilitate maintaining equilibrium between the ionized and non-ionized draw solute, wherein the ionized solute was favored. It was postulated that this would potentially result in decreased reverse salt flux of the draw solute into the feed solution. It was also understood that, when only varying the temperature of one solution, that a temperature gradient may be generated across the membrane.

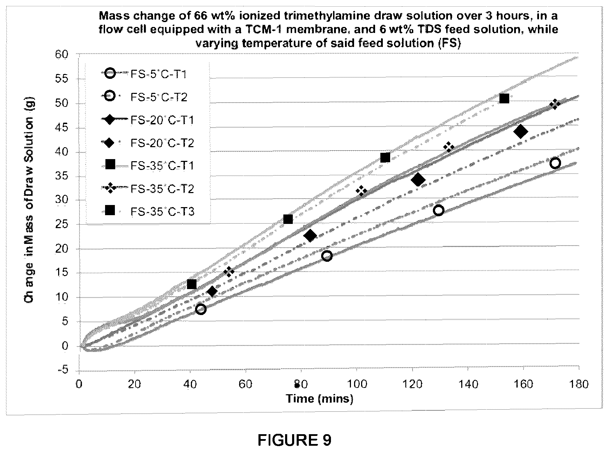

When increasing the feed solution's temperature, it was observed that a greater mass of water was transported across the membrane; decreasing the temperature decreased the mass of water transported (see Figure 9). Measured flux values further confirmed these trends, as flux increased to 28 LMH at 35°C and decreased to 14 LMH at 5°C, where typical flux values observed at room temperature were between 17 to 19 LMH (see Table 6). It is possible that the observed increase in flux at higher temperatures could be slightly impacted by evaporation of the feed solution.

Reverse salt flux of draw solute into the feed solution was measured hourly by FT-IR spectroscopy (see Table 7). As the feed solution's temperature was decreased, there was an observed slight decrease in reverse salt flux. When the feed solution's temperature was increased, the observed reverse salt flux was similar in magnitude to that observed at room temperature. This suggested that there is little overall effect of temperature on reverse salt flux.

Additional experiments were conducted wherein the temperature of both the feed and draw solutions were varied. It was considered, however, that varying the draw solution's temperature may affect mixing at the membrane surface and $CO_2$ solubility, which is inversely proportional to temperature; it was also considered that higher temperatures may facilitate evaporation of trimethylamine, which exists in equilibrium with the ionized trimethylamine draw solute.

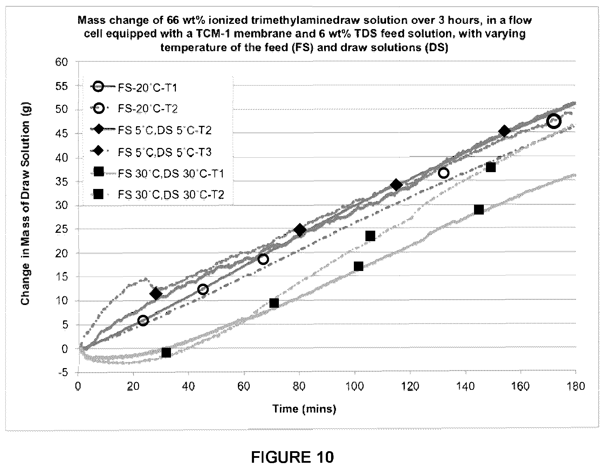

When the temperature of both solutions was increased, an initial decrease in draw solution mass was observed (Figure 10) along with a visually observed increase in gas evolution (e.g., bubbles escaping the solution). This was considered the result of decreased $CO_2$ solubility with increasing temperature; and, potentially, evaporation of trimethylamine. Flux values were determined based on the feed solution's mass decrease over the first hour of flow cell operation (see Table 6). A decrease in flux was observed when the solutions were at a lower temperature: 19 LMH at room temperature to 15 LMH at 5°C. An increase in flux was observed when the solutions were at a higher temperature: 19 LMH at room temperature to 24 LMH at 35°C.

When varying the temperature of both the feed and draw solutions, a larger variation in the reverse salt flux of the draw solute into the feed solution was observed (see Table 8). At lower temperatures, reverse salt flux was almost half of that observed at room temperature; at higher temperatures, reverse salt flux increased by approximately 10%.

The lower and upper temperatures limits of 3 to 5 °C and 30 to 35 °C, respectively, were chosen to investigate how the FO flow cell would respond to fluctuations in temperature. That only small changes were observed for the measured flux and reverse salt flux values demonstrates that the herein described FO flow cell, equipped with ionized trimethylamine as a draw solute, is robust in that it can be successfully employed at a wide range of temperatures. It was considered, however, that the draw solution may be best maintained at, or below room temperature during operation to promote dissolution of $CO_2$, and maintain high concentrations of ionized trimethylamine.

EXAMPLE 4: Variation in pH of Feed Solution

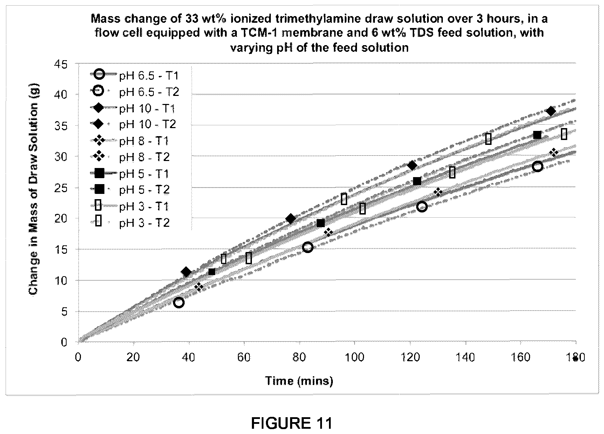

Wastewater pH can also vary depending on its source (e.g., rock formation, industrial process). To investigate effect of pH on the herein described FO flow cell, equipped with an ionized trimethylamine draw solution, feed solutions of varying pH were prepared using sodium hydroxide and hydrochloric acid to simulate wastewaters of varying pH. A stock solution comprising 6 wt% total dissolved solids (5.82% NaCl, 0.18% $CaCl_2$), with an initial pH of 6.5, was used and its pH adjusted to obtain feed solutions of pH 3, 5, 8 and 10 (see Figure 11). Addition of sodium hydroxide and hydrochloric acid was not expected to significantly increase the amount of total dissolved solids.

Experimental: Stock solutions of 33 wt% and 66 wt% ionized trimethylamine were produced as described above. Stock solutions comprising 6 wt% total dissolved solids (5.82 % sodium chloride and 0.18 % calcium chloride) were prepared as described above and pH adjusted through addition of solid sodium hydroxide or 1M hydrochloric acid.

Membranes, conditioned as described above, were loaded into the flow cell with the active/rejection layer orientated towards the feed solution. The flow cell was flushed with 3x100 mL portions of deionized water on both the feed and draw solution sides of the membrane. Glass bottles (250 mL) were used as reservoirs for the feed solution and draw solution. Repeat runs were completed for each pH value.

pH adjusted salt solution (200 mL) was loaded into the feed solution bottle, and aqueous 33 wt% ionized trimethylamine (100 mL) was loaded into the draw solution bottle. Tubing was lowered into each solution so that it did not touch the sides or bottom of the bottles. Data collection was initiated on the LabView software, followed by starting the circulating pump and timer. After 30 seconds, the balances upon which the solutions were positioned were tarred, and data points before this time were removed from analysis (see Example 1; Figure 1A). On an hourly basis, the pump was stopped and a sample was taken from the feed solution, by syringe, for reverse salt flux analysis. Reverse salt flux amounts were determined by FT-IR analysis using a Cary 630 FT-IR spectrometer purchased from Agilent Technologies; data analysis was performed with MicroLab software (see Example 1; Figure 1C).

Results and Discussion: To investigate the effect of feed solution pH on the herein described FO flow cell, a TCM-1 membrane was selected, the membrane having a recommended operating pH from 2 to 11. The pH of the feed solutions was varied from 3 to 10.

It was determined that the feed solution has a baseline pH of 6.5, and generates an average flux of 11.0 LMH when using 33 wt% ionized trimethylamine as the draw solution. As summarized in Table 9, it was observed that changing the pH of the feed solution resulted in a flux increase for all pH values, coinciding with the change in mass of the draw solution (see Figure 11). It was observed that that each of the pH adjusted feed solutions returned to a pH between 6 and 6.5 after the 3 h FO run. It was postulated that this was due to reverse salt flux of draw solute into the feed solution, wherein the ionized trimethylamine was acting as a known buffer system.

Reverse salt flux of draw solute into the feed solution was monitored hourly by FT-IR spectroscopy (see Table 10). It was observed that the initial 6 wt% TDS solution had a pH of 6.5; as the pH deviated from 6.5, reverse salt flux increased, with the highest reverse salt flux being observed from solutions at the upper and lower limits of the pH range studied.

EXAMPLE 5: Treatment of Oil & Gas Wastewater

An application of the herein described FO flow cell, equipped with an ionized trimethylamine draw solution, is remediation of wastewater from oil and gas industries. To demonstrate this application of the present FO system, samples of process water from the oil and gas industry were acquired, and used as feed solutions to be dewatered by the herein described FO flow cell.

Experimental: Stock solutions of 66 wt% ionized trimethylamine were produced by carbonating 2 L portions of a 45 wt% aqueous trimethylamine solution in a 1 gallon stainless steel Chemineer reactor, at 10 bar for 30 minutes.

Three types of process water were acquired for testing: (i) a brackish water; (ii) a de-oiled, post-skimming water, pre-softening treatment (deoiled water being process water from an underground aquifer); and (iii) a weak acid cation exchanged water, post-softening treatment (deoiled water from an underground aquifer, treated via a weak acid cation exchange). Each sample of wastewater comprised <1 wt% TDS.

Conditioned TCM-1 membranes were loaded into a flow cell with the active/rejection layer orientated towards the feed solution. The cell was flushed with 3x100 mL portions of deionized water on both the feed and draw solution sides of the membrane. Glass bottles (250 mL) were used as reservoirs to contain the feed solution and draw solution. Duplicate runs were completed for each feed/draw combination over 3 hours.

Process water (200 mL) was loaded into the feed solution bottle, and draw solution (100-150 mL) was loaded into the draw solution bottle. Tubing was lowered into each solution so that it did not touch the sides or bottom of the solution-containing bottles. Data collection was initiated on the LabView software, followed by starting a circulating pump and timer (see Example 1; Figure 1A) After 30 seconds, the balances upon which the solution bottles were placed were tarred, and any data points collected before this time were removed from analysis. On an hourly basis, the pump was stopped and a sample was taken from the feed solution, by syringe, for reverse salt flux analysis. Reverse salt flux amounts were determined by FT-IR analysis using a Cary 630 FT-IR spectrometer purchased from Agilent Technologies; data analysis was performed with MicroLab software (see Example 1; Figure 1C). ICP-OES analysis was completed by Queen's University Analytical Services Unit (QASU, Kingston, ON); see Table 25.

Results and Discussion: Three samples of steam assisted gravity drainage (SAG-D) process water were obtained from a Canadian oil and gas company): (i) brackish water (brackish); (ii) deoiled, pre-softening water (deoiled); and(iii) water softened using a weak-acid cation exchange column (WAC). The samples were obtained from active SAG-D systems, and were representative of relatively challenging feed solutions given their concentration of total suspended solids. As described above, small-scale FO studies were completed using the wastewaters as feed solutions, with a 66 wt% ionized trimethylamine draw solution; and, after 3 hours of continuous operation, a 50 - 60% reduction in mass was reproducibly observed. This corresponded to a flux of 34-36 L/m$^2$h, which was found to be comparable to RO flux values observed using seawater as a feed stream under typical desalination conditions [http://www.gewater.com/products/industrial-membranes.html, accessed March 13, 2015; http://www.lgwatersolutions.com/, accessed March 13, 2015].

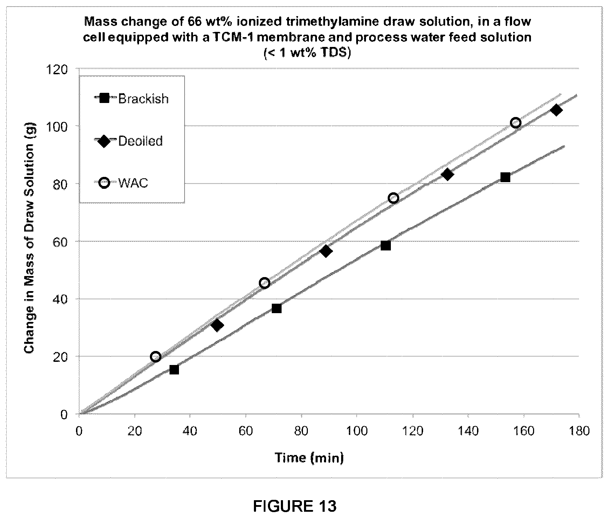

Referring to Figure 13 and Table 11, it was demonstrated that the FO system as described herein continued to dewater the feed solution(s); it was postulated that further concentration of said feed solution could be achieved, given that no significant decrease in dewatering activity was observed, if the system had been allowed to run longer. Reverse salt flux of the draw solute into the feed solution was slightly higher than that observed when using simulated solutions (see above Examples). This was expected, since the feed solutions comprised lower TDS, and thus had lower ionic strength, and were generally more susceptible to diffusion of draw solute across the membrane. A % TDS rejection of >94% was observed, as determined by ICP (Table 25).

EXAMPLE 6: Mining Tailings

Generating Mining Water Sample: Samples of "dry" tailings, which more closely resembled mud, were received from a Canadian mining organization. To generate aqueous samples, tailing solids (250 g) were combined with water (750 mL) to give a 25 wt% solids sample, to mimic a mining slurry. The aqueous sample was then stirred at 650 rpm with an overhead stirrer (4-blade propeller) for 24 hours. It was recommended by the supplier to filter these samples using a 0.5-micron filter for removing solids (based on their current practices); however, due to availability, an extra fine filter paper was used (Whatman #5 = 2.5 um). This procedure was performed twice to generate sufficient amount of water for testing.

Batch Sample #1: 251.58 g Mud + 751.75 g DI water to give 1003.33 g total (25.07 wt%; conductivity = 340 uS/cm; pH = 3.75)

Batch Sample #2: 303.32 g Mud + 910.29 g DI water to give 1213.61 g total (24.99 wt%; conductivity = 393 uS/cm; pH = 4)

Batch sample #2 was added to batch sample #1, and conductivity was measured after combination (please note that, within experimental error, 340 and 393 μS were considered comparable).

A draw solution containing 66 wt% ionized trimethylamine in water was generated by carbonating 2 L batches of ~45 wt% trimethylamine in water, using a Chemineer reactor. The resultant stock ionized trimethylamine solution was kept sealed in a glass bottle.

TCM-1 membranes were shipped dry, and labeled with which was an active side. Before use, the membrane was soaked in deionized water for at least 30 min to open its pores. After soaking, the membrane was kept moist by storing in water. As needed, circles of membrane (4 cm in diameter) were cut from a sheet of said membrane, and soaked for a minimum of 30 min prior to use. The membrane was cut so that it would fit within an o-ring contained within the flow cell's membrane cartridge (see Example 1; Figure 1A), to minimize leaking of liquid around the cell.

Forward Osmosis Flow Cell: A forward osmosis (FO) flow cell was then set up, using a draw solution of 66 wt% ionized trimethylamine in water (500 mL), a batch sample feed solution (500 mL), and a TCM-1 membrane, as described in Example 1, and Figure 1A.

The FO flow cell was run under air, and continued running until the feed and draw solutions' mass changes reached a plateau. A repeat trial of the FO run was done to determine reproducibility. Removal of draw solute from the resultant, diluted draw solution was accomplished by bubbling nitrogen through the solution while heating it in an 85°C metal heaton (manufactured by Radleys; solution temperature ~ 70 °C) (2L flask). A condenser was attached to the outlet of the draw solution-containing flask so that minimal water loss occurred.

External analytics were completed by Caduceon (see Tables 12 and 13).

After the first FO run, to allow for analysis, the feed solution required a three times dilution in order to have enough solution for analysis (40 mL of concentrated feed was diluted to 120 mL)

Determining Solids Content in Original Aqueous Sample: The samples of "dry" tailings, which more closely resembled mud, were filtered through a 2.5 um filter paper, and dried in a Buchner funnel by gravity, overnight. Initial weight was recorded at 100.25 g, with weight after drying overnight being recorded at 82.13 g; this corresponded to a weight loss of 18.12 g (18%). It was considered that any liquid in tailings, making the sample more closely resemble mud, could have been of a volatile nature: after drying over night, there was no liquid remaining in the filtration flask.

Results and Discussion: Mining tailing samples were successfully treated using an ionized trimethylamine draw solute for forward osmosis. Flux values between 23 and 25 LMH, and a 60-90% reduction in feed solution mass were achieved using a 66 wt% ionized trimethylamine draw solution (see Table 14). Draw solute reverse salt flux (reverse salt flux) was found to be relatively high after 48 hours of testing; however, this is expected to be lower in a non-circulating batch system (e.g., a system wherein each unit of volume of feed and draw solution makes only one pass by the FO membrane); see Table 15. The FO cell, as used and described herein, demonstrated a relatively high arsenic rejection (<1 ppm in the recovered water) as compared to Canada's Ministry of Environment's acceptable arsenic levels of 25 ppm (see Tables 12 and 13. This example demonstrated the successful use of the FO system, with the ionized trimethylamine draw solute, in the treatment of typically hard to treat waste streams from mining.

EXAMPLE 7: Treatment of Municipal Wastewater

Stock solutions of 66 wt% ionized trimethylamine were produced by carbonating 2 L portions of a 45 wt% aqueous trimethylamine solution, in a 1 gallon stainless steel Chemineer reactor, at 10 bar for 30 minutes. Concentrated municipal wastewater (from China) was received from a Chinese wastewater treatment company. Initial pH and conductivity of the wastewater was 6.99 and 10.8 mS/cm, respectively; the feed solution was not pre-treated. TCM-1 membranes, conditioned as described above (see Example 1), were loaded into a FO flow cell with their active/rejection layer orientated towards the feed solution. The cell was flushed with $3 \times 100$ mL portions of deionized water on both the feed and draw solution sides of the membrane. Glass bottles (500 mL) were used as reservoirs to contain the feed solution and draw solution. Each run was conducted until a plateau was reached in the change in mass of feed and draw solutions, and completed in duplicate.

Wastewater (500 mL) was loaded into the feed solution bottle, and draw solution (200 mL) was loaded into the draw solution bottle. Tubing was lowered into each solution so that it did not touch the sides or bottom of the solution-containing bottles. Data collection was initiated on LabView software, followed by starting a circulating pump and timer. After 30 seconds, the balances upon which the solution bottles were placed were tared, and any data points collected before this time were removed from analysis (see Example 1; Figure 1A). Periodically, the pump was stopped and a sample was taken from the feed solution, by syringe, for reverse salt flux analysis. Reverse salt flux amounts were determined by FT-IR analysis using a Cary 630 FT-IR spectrometer purchased from Agilent Technologies; data analysis was performed with MicroLab software (see Example 1; Figure 1C).

Results and Discussion: Using the herein described FO flow cell and process, a reduction in wastewater mass (~60%), conductivity, and total phosphorus content (as measured by ICP-OES) was achieved for the feed solutions and/or the water isolated therefrom, without employing any pretreatment (see Table 16). Further, average flux values of 35 LMH were found to be comparable to RO seawater desalination flux values (30-40 LMH). The chemical oxygen demand (COD) remained high after draw solute removal; however, COD values are dependent on concentration of organics in a sample (e.g., amounts of residual draw solute in recovered water). Without wishing to be bound by theory, it is expected that an additional treatment step to remove residual draw solute from the FO recovered water, and thus present a lower COD.

This example demonstrates the successful use of the present FO system, incorporating a draw solution with an ionized trimethylamine draw solute, in the treatment of concentrated municipal wastewater, which is difficult or expensive to treat using currently available methods.

EXAMPLE 8: Treatment of Produced Water and Flowback Water from Fracking Operations

Stock solutions of 66 wt% ionized trimethylamine were produced by carbonating 2 L portions of a 45 wt% aqueous trimethylamine solution, in a 1 gallon stainless steel Chemineer reactor, at 10 bar for 30 minutes.

Produced wastewater was received from a Canadian fracking operation (northern Alberta) with initial pH and conductivities of 6.47 and 191 mS/cm, respectively; initial TDS was approximately 19 wt%.

A first, initial FO run was completed with no pretreatment of the feed solution. Additional runs were then completed using a filtered and softened sample of feed solution. Filtering was done using extra fine (Whatman #5) filter paper. Softening of the feed solution was completed while monitoring pH: with stirring, NaOH (3.3 mg/mL) was added to the filtered feed solution; after stirring for 30 min, the solution was filtered again; sodium carbonate (15.4 mg/mL) was then added to the solution, and stirred for an additional 30 min; and then, said resultant solution was filtered and neutralized with HCl. Forward osmosis was also undertaken using a sample softened with only sodium carbonate, followed by filtering and neutralization with HCl; or, by only adding sodium carbonate.

Flowback feed solution was also obtained from the Canadian fracking operations (conductivity = 130.4 mS/cm, pH = 6.38), and was processed after filtering through a course filter paper. Initial TDS of the solution was ~13 wt%.

Conditioned membranes (see Example 1) were loaded into a FO flow cell with the membrane's active/rejection layer orientated towards the feed solution. The cell was flushed with 3x100 mL portions of deionized water on both the feed and draw solution sides of the membrane. Glass bottles (250 or 500 mL) were used as reservoirs to contain the feed solution and draw solution. Each run was allowed to reach equilibrium and performed in duplicate.

Produced or flowback water (200 or 500 mL) was loaded into the feed solution bottle, and concentrated draw solution (200 or 500 mL) was loaded into the draw solution bottle. Tubing was lowered into each solution so that it did not touch the sides or bottom of the solution-containing bottles. Data collection was initiated on the LabView software, followed by starting a circulating pump and timer. After 30 seconds, the balances upon which the solution bottles were placed were tarred, and any data points collected before this time were removed from analysis (see Example 1; Figure 1A). Periodically, the pump was stopped and a sample was taken from the feed solution, by syringe, for reverse salt flux analysis. Reverse salt flux amounts were determined by FT-IR analysis using a Cary 630 FT-IR spectrometer purchased from Agilent Technologies; data analysis was performed with MicroLab software (see Example 1; Figure 1C).

Results and Discussion: With respect to the produced wastewater feed solutions, it was found that they each possessed a high calcium content that could lead to scaling; thus softening was required. It was found that use of the herein described FO flow cell lead to an overall reduction in feed solution mass by approximately 20% for the produced water system; flux was calculated to be approximately 9 LMH with a TCM-1 membrane. By way of the standard softening methods employed for treatment of the produced water, precipitation in the concentrated feed solution was avoided. The recovered water after draw solute removal was below a desired 4000 ppm (as requested by the frack operator for their own processing requirements), and represented a 99.9% rejection of TDS (see Table 17). ICP-OES results showed a concentration of elements in the feed solution after the FO process (see Table 18)

FO processing of the flowback water showed a 40% reduction in mass of the feed solution, with a flux of approximately 15 LMH (see Table 19). The recovered water after draw solution removal was well below the desired 4000 ppm and represented a 99.6% rejection of TDS (see Table 20). ICP-OES results showed a concentration of elements in the feed solution after FO treatment (see Table 21). The %TOC rejection was lower than desired; however, this value is dependent on concentration of organics in a sample (e.g. amounts of residual draw solute in recovered water); see Table 20. Without wishing to be bound by theory, it is anticipated that the system can be readily optimized to reduce the residual draw solute in the FO recovered water, and thus present a higher %TOC rejection.

EXAMPLE 9: FO analysis using hollow-fiber modules as membranes

Two types of hollow-fiber membrane modules (HFM-1 and HFM-2), provided by a fourth commercial membrane supplier, were evaluated using simulated feed solutions and ionized trimethylamine draw solutions. Generally, with hollow-fiber membranes, a relatively higher membrane surface area can be obtained in a small module footprint.

Experimental: The HFM-1 and HFM-2 modules were a hollow fiber system, where a feed solution ran outside the fibers (active layer faces feed solution), and a draw solution ran inside of the fibers. The outside, feed solution must run at a higher flow rate than the inside, draw solution. It was suggested 1 L/min flow rate be used for the feed solution, and a 5-7 mL/min flow rate be used for the draw solution. The draw solution's inlet to the membrane needed to be kept below 2 bar so that the fibers did not rupture. The draw solution's outlet was directed to a separate bucket from the draw solution's reservoir in case of solid formation in the draw solution.

The membrane was set up so that the feed solution and the draw solution flowed counter current to each other. This meant that the most concentrated draw solution contacted the most concentrated feed solution (please note: draw solution was still more concentrated than feed solution), maximizing efficiency of water movement across the membrane. The membrane was flushed with DI water to remove any storage solution, with which the membrane may have been shipped. The system was then rinsed with the appropriate feed and draw solution before starting data collection. Data collection was done using the Labview software.

The HFM-1 membrane was investigated using: i) a 3 wt% NaCl feed solution (1000 g) with a 34.5 wt% ionized trimethylamine draw solution (1500 g); and, ii) a 15 wt% NaCl feed solution with a ~66 wt% ionized trimethylamine draw solution; and iii) produced water, from a Canadian fracking operation, that was softened with sodium carbonate with a ~66 wt% ionized trimethylamine draw solution; and, iv) flowback water, from a Canadian tracking, with a ~66 wt% ionized trimethylamine draw solution. Pressure at the draw solution's inlet was maintained between 0.6 - 0.9 bar. Each flow cell system was run for between 3 hours to 6 hours. The membrane area of the HFM-1 module was 0.062 m$^2$.

The HFM-2 module was investigated using a 3 wt% NaCl feed solution with a 34.5 wt% ionized trimethylamine draw solution. Pressure at the draw solution's inlet was maintained around 0.7 bar. The membrane area of the HFM-2 module was 0.089 m$^2$.

Determination of the membrane's % NaCl rejection was accomplished by measuring residual solid remaining after removing water and amine from a draw solution sample by heating to 120 °C for approximately 6 hours. Draw solute reverse salt flux into the feed solution was monitored via FT-IR (see Example 1; Figure 1C).

Results and Discussion: Two types of hollow fiber membrane modules were investigated: HFM-1 and HFM-2 modules. Both modules were tested using a 3 wt% NaCl feed solution and a 34.5 wt% ionized trimethylamine draw solution.

Five runs were completed with a FO flow cell containing the HFM-1 module under the above conditions (see Table 22): one trial was run with a 3 wt% feed solution for 160 min (HFM-1-T1); a second trial was run with a 15 wt% feed solution for 160 min (HFM-1-T2); a third trial was run wit a 3 wt% feed solution over 350 min (HFM-1-T3); a fourth trial was run with softened produced water (HFM-1-T4), and a fifth trial as run with flowback water (HFM-1-T5). Over the first three hours, HFM-1-T3 was similar to HFM-1-T1 (comparable due to similar feed and draw solutions). After ~6 hours, the feed solution of HFM-1-T3 was concentrated by ~88%; however, draw solute reverse salt flux (wt% ionized TMA, Table 22) was relatively higher than observed over the course of the three hour run, which is expected due to the concentration of the feed solution. The reverse salt flux (RSF) after the six-hour run was comparable to that achieved after the three hour run.

For the fourth trial, HFM-1-T4, HFM-1 module was used to test dewatering of produced water, which had been filtered and softened with sodium carbonate, using a ~66 wt% ionized trimethylamine draw solution. The module maintained a high salt rejection, similar to what has been observed and described above. A flux decrease was expected as produced water has a higher TDS than the simulated NaCl feed solutions.

For the fifth trial, HFM-1-T5, HFM-1 module was used to test dewatering of flowback water, using a ~66 wt% ionized trimethylamine draw solution. The module maintained a high salt rejection and volume reduction, similar to what was observed and described above. A flux decrease was expected as flowback water has a higher TDS than simulated NaCl feed solutions.

One trial run was completed with a FO flow cell containing the HFM-2 module under the above conditions with a 3 wt% feed solution for 180 min (see Table 22). The flux and % NaCl rejection were found to be comparable to the HFM-1 trials, with a 79% reduction in feed solution mass over 3 hours. Similarly, reverse salt flux (RSF) was slightly higher than desired; without wishing to be bound by theory, it was postulated that this may be an indication of pH instability over the trial's duration. No pH modification was carried out for the HFM-2 or HFM-1 membrane trials, however.

EXAMPLE 10: Draw Solute Removal

Materials and Equipment: To investigate means for removing the ammonium-based draw solute from the herein described draw solutions, the following materials and/or equipment were required:

    i. 5L jacketed reactor with insulation

ii. circulating heater to heat reactor

iii. a heat source for sparge gas

iv. heated reservoir for solution to be degassed (hotplate / 2L, 4-neck flask)

v. circulating pump (Fisher Scientific™ variable flow chemical transfer pump)

vi. spray nozzle to inject solution into top of reactor

vii. stainless steel wool stuffed into reactor to provide surface area (SS wool)

viii. sparge gas (compressed air)

ix. trap to capture TMA being forced out of reactor

Operating Conditions: Conditions employed with the above set up were as follows:

x. reactor & tubing insulated

xi. circulating heater set to: 75°C

xii. air heater set to: 75°C

xiii. hotplate set to: 70°C

xiv. pump speed set to: 5, fast

xv. airflow set to: 5

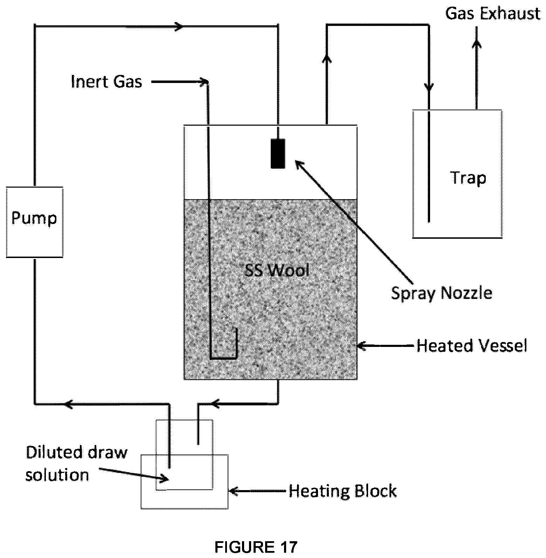

Method of Operation: The 2L 4-neck round bottom filled with 800 mL of deionized water, placed in a heaton with a temperature probe, and heated to 70°C. The small circulating pump was connected to said round bottom to draw the water from it, and pump it to the top of the column with a spray nozzle; the water then flowed down the column and returned to the round bottom flask (see Figure 17).

After the water was circulating, all heat sources were turned on and allowed to reach temperature and stabilize for 1 hour; consequently, the reactor's internal temperature was recorded at 70°C.

After temperatures stabilized, a separatory funnel was used to add 200ml of concentrated draw solution to the round bottom flask: by adding concentrated draw solution to the 800 mL of DI water, provides a dilution representative of what a dilute draw solution may be. Further, the concentrated draw was added to the already heated water to prevent loss of TMA during heating. After the water and draw solution thoroughly mixed, an initial reading at '0 min' was taken to establish a starting point. There after, on an hourly basis, aliquots were removed from round bottom flask and analyzed by FT-IR to determine the draw solute's concentration (see Example 1; Figure 1C)

Results and Discussion: It was understood that once a forward osmosis was complete using the herein described flow cell, it would be necessary to remove the ionized trimethylamine draw solute from the diluted draw solution to generate low TDS water. As previously described (for example, see PCT application PCT/CA2011/050777), an ionized switchable additive can be 'switched off', or rendered non-ionized with mild heating (50°C) and/or by use of an inert sparging gas such as nitrogen or air.

As the non-ionzed form of the switchable additive and draw solute is trimethylamine, a gas under ambient conditions, it was expected that mild heating or sparging may remove not only $CO_2$ from the draw solution, but the non-ionized draw solute as well, generating water. Consequently, methods of efficiently removing the TMA-based draw solute from solution were considered.

Consequently, a litre-scale system for draw solute removed was investigated. It was recognized that a heated, high surface area needed to be incorporated into the system to maximize gas removal from the draw solution; as such, the 5 L jacketed column was packed with stainless steel wool. A sparge gas was used to facilitate movement of gaseous vapours from said column as decomposition of the draw solute liberated TMA and $CO_2$ gas. The system was run between 50°C and 70°C, with any runs above 70°C showing a substantial loss of water with the TMA and $CO_2$. This system successfully allowed for <0.1 wt% residual draw solute to be reached in under 3 hours of circulation, thereby demonstrating effective removal of draw solute from the dilute draw solution.

EXAMPLE 11: Comparison of Sparging Gases for Draw Solute Removal

66 wt% Ionized TMA (100 mL) was diluted with deionized water (100 mL) in a 2 L 3-neck round bottom flask. One neck of the flask was connected to a temperature probe, the second neck was connected to a gas dispersion tube ("c" frit porosity) that was connected to a flow meter, with the third neck was connected to another 2-neck round bottom (250 mL) that was cooled in an ice/salt water bath. The second neck on the 250 mL flask was connected to a piece of tubing that was directed to the back of a fumehood as an exhaust.

Trials were run at three different temperatures: 46 °C, 56 °C and 70 °C. For each temperature, one trial was completed using nitrogen gas, and another using carbon dioxide. For trails at 46 °C, gas flow rate (FR) was 4 standard cubic feet per hour; for the higher temperatures, gas flow rate was 8 standard cubic feet per hour. Each trial was an hour in length, and samples were taken using a pasture pipette at 0, 5, 10, 15, 20, 25, 30, 40, 50, and 60 minutes. FT-IR was done on each sample to determine the ionized TMA concentration (see Example 1, Figure 1C).

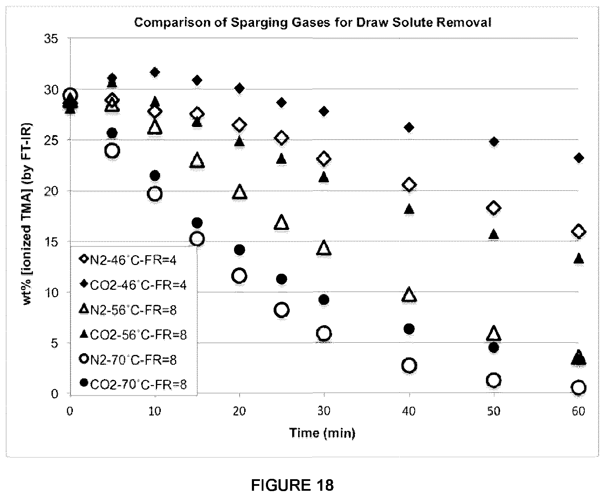

Results and Discussion: Use of $N_2$ versus $CO_2$ as a sparging gas for removal of ionized trimethylamine at several temperatures was investigated. Use of $CO_2$ as a sparging gas was envisioned to alleviate need for separate gases during draw solution regeneration. Overall, $N_2$ appeared to function better at removing the ionized trimethylamine than $CO_2$; at lower temperatures, it appeared that $CO_2$ was being absorbed, as the concentration of ionized trimethylamine initially increased. For the 70 °C run sparged with $N_2$, remaining wt% of ionized trimethylamine was 0.5 wt%; it was 3.3 wt% for the solution sparged with $CO_2$ (see Figure 18)

EXAMPLE 12: Draw Solution Reconstitution

FO systems employing the herein described flow cell, equipped with ionized trimethylamine as the draw solution, can be designed to be a closed-loop system. A closed-looped system will minimize cost and wasted materials (e.g., draw solute), such that TMA and $CO_2$ gases eliminated from the dilute draw solution will be continuously recycled to generate fresh concentrated draw solution for use in FO flow cells. Such a system will be a closed-loop, continuous system.

Materials: Trimethylamine was purchased as a 45 wt% solution in water, and used as received from Sigma Aldrich. Coleman instrument grade carbon dioxide (99.99%) was purchased from Air Liquide. Deuterium oxide was purchased from Cambridge Isotopes Laboratories and used as received.

Equipment and Analysis: Carbonation was performed using a Parr 5000 Series Multiple Reactor System using 75 mL pressure vessels with star (cross) shaped stir bars. Large scale carbonation was performed in a 1 gallon Chemineer reactor vessel, equipped with baffles, and one propeller.

$^1$H NMR spectra were acquired using a Varian MR400 spectrometer. Key chemical shift representative of TMA in solution was identified to be 2.23 ppm in $D_2O$; the representative chemical shift of the ionized trimethylamine was 2.87 ppm in $D_2O$. For a mixture of TMA and ionized trimethylamine, an additional broad peak was observed in the NMR spectrum, with the chemical shift ranging between 2.23 and 2.87 ppm in $D_2O$, depending on the ratio of TMA to ionized trimethylamine. No calibration curve was performed in order to narrow down a relationship between the ratio of TMA to ionized TMA and this broad peak. Without wishing to be bound by theory, it was postulated that the broad peak may have been indicative of an equilibrium between TMA and ionized TMA.

Prior to its use in the experiment outlined below, a stock ionized trimethylamine solution was produced via carbonation of TMA, and was stored for several days.

Procedure: Pressure drop observations were performed using 45 wt% aqueous TMA (1 mL) and $CO_2$ (5 or 9 bar, static pressure), involving introducing the $CO_2$ to the TMA, and measuring how much time it took for the introduced $CO_2$ pressure to equalize within the system.

Temperature increase observations were performed using 45 wt% aqueous TMA (50 mL) pressurized to 1, 5 or 9 bar of dynamic $CO_2$ pressure, measuring the time it took to reach a maximum temperature within the system. Sample aliquots were taken at reported times (see below), and analyzed by $^1$H NMR spectroscopy.

Large-scale carbonations were performed using 45 wt% aqueous TMA (2 - 2.5 L) pressurize to 10 bar of dynamic $CO_2$ pressure for 30 minutes, with stirring at 600 rpm. After 30 minutes the $CO_2$ flow was stopped, and the reactor was kept at pressure for 3.5 hours until the vessel's temperature returned to below 40 °C.

Results and Discussion: Carbon dioxide was added to the TMA solution, rather than doing the opposite or simultaneous addition, because TMA solubility in water is high (45 wt% at saturation), whereas $CO_2$ solubility is low (< 1% at saturation). It was considered, therefore, due to this difference in solubility, that the dissolution of $CO_2$ in water (and subsequent conversion to bicarbonate) is the rate-determining step, and thus became a subject of study (see below).

It was observed that a reaction between TMA and $CO_2$ in water, to generate ionized trimethylamine, is exothermic; as such, the time required to reach maximum temperature due to the exotherm of the reaction was determined (see Table 23). Aliquots of solution were removed periodically from the 50 mL of 45 wt% aqueous TMA pressurized with $CO_2$ (as described above), and analyzed by $^1$H NMR spectroscopy to determine approximate conversion.

Under 1 bar of $CO_2$ pressure, the reaction mixture's temperature increased by 4°C over 3 h, at which point it remained constant for an additional 3 h. At this time, an aliquot was removed and analyzed by $^1$H NMR spectroscopy, which revealed very little carbonation of TMA had actually occurred implying that higher pressures were required.

Under 5 bar of $CO_2$ pressure, the mixture's temperature increased by 12°C after 1 h and returned to room temperature after 5 h. After 2 h, $^1$H NMR analysis of the reaction mixture indicated carbonation of TMA was essentially complete, indicating an improvement in reaction kinetics of carbonation relative to the same process at 1 bar.

Under 9 bar of $CO_2$ pressure, the temperature increased by 21°C within 25 min. $^1$H NMR analysis of an aliquot taken at this time revealed indicated carbonation of TMA was essentially complete.

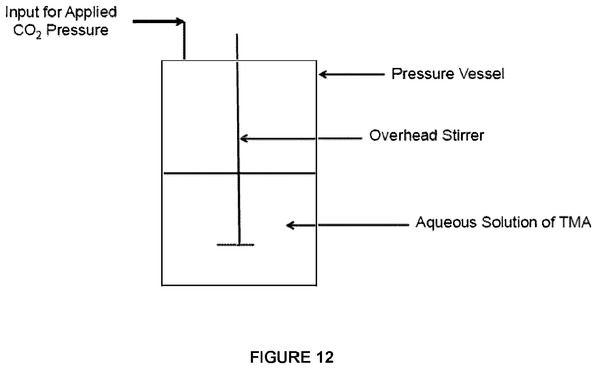

To further study reconstitution rates on a more industrially representative scale, the system was scaled up to 2 - 2.5 L of TMA under 10 bar of $CO_2$ pressure; carbonation of TMA was essentially complete after approximately 30 min, using a configuration shown in Figure 12.

These studies demonstrated the effective reconsititution of the draw solution components to regenerate the draw solution for use in FO, under conditions suitable for use in a closed-loop, continuous FO system.

EXAMPLE 13: Larger Scale Forward Osmosis Procedure

Materials: Trimethylamine was purchased as a 45 wt% solution in water, and used as received from Sigma Aldrich. Sodium chloride was purchased from VWR. Coleman instrument grade carbon dioxide (99.99%) was purchased from Air Liquide. Deionized water (18 MΩ-cm) was provided using an Elga Purelab Pulse system. Sodium chloride solutions were prepared at the desired concentrations.

Larger Scale FO Unit Parts List:

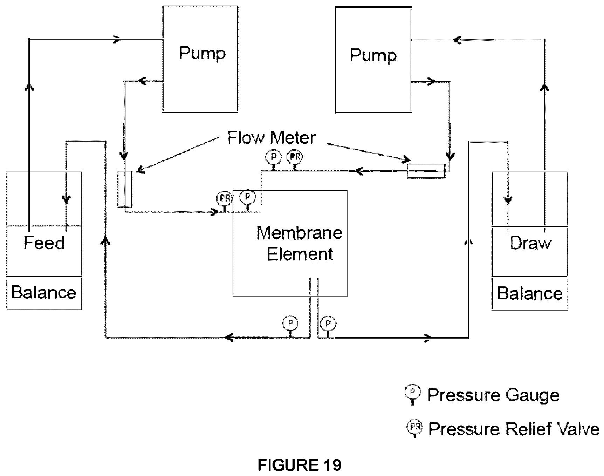

- Material compatibility: stainless steel, polytetrafluoroethylene (PTFE), polyethylene (PE), polyvinylchloride (PVC), or polypropylene (PP), as trimethylamine was not compatible with brass or PS = polystyrene; viton and butyl rubber may also degrade with time
- Membrane Element: TCM-1 custom PFO unit (0.42 $m^2$ membrane area)
- 4 × pressure gauge or pressure sensor to keep pressure at membrane below 0.5 bar (Swagelok PGI-63C-PG15-LAOX)
- 2 or 4 × reservoir, depending on requirement of set up (Uline S-19418)
- 2 × variable speed pumps, offering a max flow rate of 4-5 L/min (Icon Process Controls NEMA-4X: Emec Prius Motorized Diaphragm Pump, Floor Mount, PVC Head with Manual Venting, VITON O-Rings, PTFE Diaphragm, Ceramic Balls, NEMA Motor Mount, Expoxy Coated Aluminum Frame, Manual Stroke Adjustment, Rated at 520LPH at 5 Bar (70PSI), DC Motor, 3/4HP, 90VDC, 56C Frame, Wiring between Motor and Speed Controller, Liquid Tite NEMA 4X Enclosure, Mounting Plate for Motor Speed Controller, 304SS (foregoing provides make, model, and material of manufacture for the pumps)).
- 2 × flow meters if needed for determining flow rate (Flow Meter and Controller, Icon Process Controls IPC32100ILCAN IPC3210038CAN, IPC8050CAN, IPC399001CAN; and Power Supply, Omega PSR-24L: 1/2" Signet Low Flow, Flow Meter, PVDF Body, NPT Ends, Complete with LCD Controller Which Shows Flow Rate and Total, Flow Range of 0.3LPM to 3.8LPM (foregoing provides make, model, and material of manufacture for the meters))
- 2 or 4 × scales (appropriate in size to measure feed and draw solution masses)
- 2 × pressure relief valves, depending on set up (Swagelok KCB1C0A2A5P20000).
- Tubes and valves (HDPE plastic tubing and connectors purchased from hardware store such as Rona, Home Depot, CanadianTire, Lowes, etc.)
- Three-way Valves (McMaster Carr 4467K43) for switching between reservoirs as needed
- See Figure 19 for set-up of larger scale FO unit.

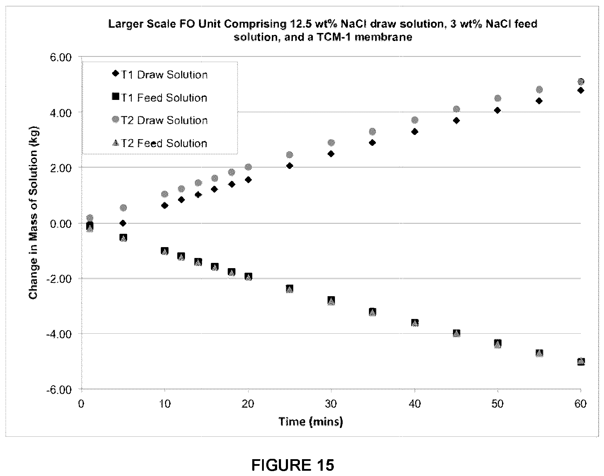

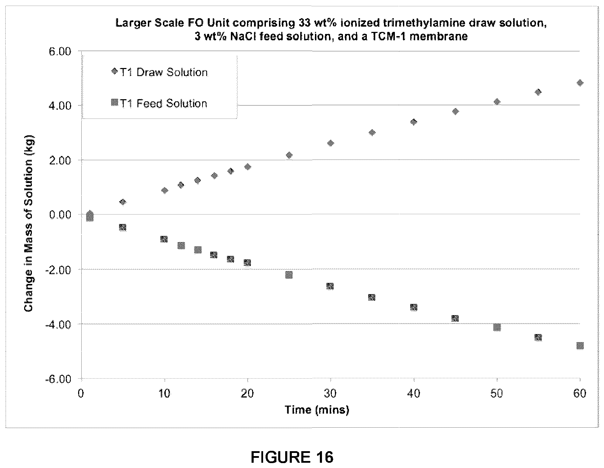

Representative Larger Scale FO Run: A sodium chloride solution (20 kg) was loaded into a feed solution reservoir. Ionized trimethylamine solution (20 kg) was loaded into a draw solution reservoir. Pumping the feed solution was first initiated at a slow flow rate of ~0.5 L/min, with the draw solution pumping at a rate of ~0.5 L/min. Feed solution flow rate was then increased to a desired flow rate of ~2 L/min, followed by a draw solution flow rate of ~2L/min. Scales under the feed and draw reservoirs were tarred, and a timer was started. Mass readings were recorded at a desired time interval. Flux was determined based on the first 30 min of testing (see Table 24, Figure 15, and Figure 16 for details on specific FO runs).

Representative Larger Scale Sodium Chloride Run: A 3 wt% sodium chloride solution (20 kg) was loaded into a feed solution reservoir. A 12. 5 wt% sodium chloride solution (20 kg) was loaded into a draw solution reservoir. Pumping the feed solution was first initiated at a slow flow rate of ~0.5 L/min, with the draw solution pumping at a rate of ~0.5 L/min. Feed solution flow rate was then increased to a desired flow rate of ~2 L/min, followed by a draw solution flow rate of ~2L/min. Scales under the feed and draw reservoirs were tarred, and a timer was started. Mass readings were recorded at a desired time interval. Flux was determined based on the first 30 min of testing (see Table 24, Figure 15, and Figure 16 for details on specific FO runs).

<u>Results and Discussion</u>: The FO flow cell was initially run using sodium chloride feed solutions to mimic osmotic pressure differences that were expected to be observed when using the ionized trimethylamine draw solution. A 12.5 wt% NaCl solution had similar osmotic pressure to a 33 wt% ionized trimethylamine; therefore, flux obtained when using a 3 wt% NaCl feed solution and 12.5 wt% NaCl draw solution should be comparable to flux obtained when using a 3 wt% feed solution and a 33 wt% ionized trimethylamine solution. One run was done using actual ionized trimethylamine solution to confirm this assumption.

EXAMPLE 14: Dewatering glycol/water mixtures using ~ 66 wt% ionized trimethylamine draw solution

<u>Experimental</u>: A water sample was filtered through activated carbon, to remove coloured contaminates, before using it as a feed solution within the herein described FO flow cell. The filtered water sample (200 mL) was loaded into a feed solution bottle, and concentrated draw solution (100 mL) was loaded into a draw solution bottle. Tubing was lowered into each solution so that it did not touch the sides or bottom of the solution-containing bottles. Data collection was initiated on the LabView software, followed by starting a circulating pump and timer. After 30 seconds, the balances upon which the solution bottles were placed were tarred, and any data points collected before this time were removed from analysis (for example, see Example 1; Figure 1A).

<u>Results and Discussion</u>: Use of forward osmosis to overcome an industrially relevant problem of separating glycol/water mixtures was investigated. Using ~66 wt% ionized trimethylamine as a draw solution, and a glycol/water mixture (obtained from Fielding Chemicals) as a feed solution within the herein and above described FO flow cell, a flux of 6.1 L/m$^2$/h was obtained. A low flux value was unexpected; however, glycols can contribute to a solution's osmotic pressure, and thus may be a contributing factor to the lower than expected flux value.

EXAMPLE 15: FT-IR Calibration for Analysis of Trimethylamine and Ionized Trimethylamine in Solution

<u>Preparation of Standard Solutions</u>: Aqueous trimethylamine (45 wt%) was purchased from Sigma-Aldrich (cat # 92262). Dilutions of this solution were made using deionized water to give the appropriate concentrations for analysis.

Aqueous ionized trimethylamine (66 wt%) was generated by carbonating 2 L portions of 45 wt% aqueous trimethylamine, for a minimum of 30 minutes, at 9 bar with stirring at 600 rpm, in a 1 gallon Chemineer reactor high pressure reactor setup. Dilutions of this solution were made using deionized water to give concentrations appropriate for analysis.

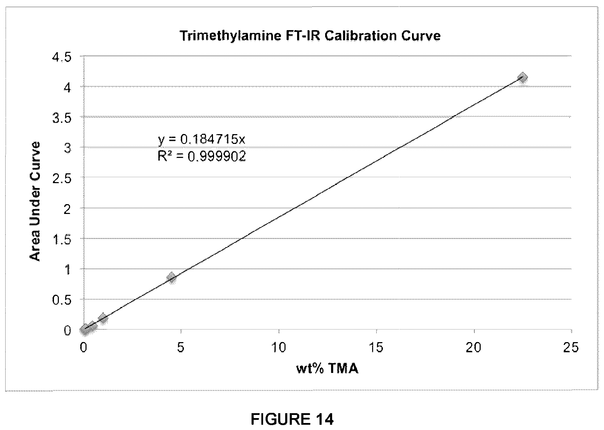

<u>Trimethylamine FT-IR Calibration</u>: Using ATR-FT-IR (Agilent Cary 630 FT-IR bench top Spectrometer), approximately 2 drops of each standard solution was deposited onto a sensor. A water spectrum was subtracted from resultant spectra. Area under the curve, from 1290 to 1240 cm$^{-1}$, centered at 1265 cm$^{-1}$, was recorded; a calibration curve was generated, wherein wt% TMA = [Area]/0.1847 (see Table 1B, and Figure 14).

<u>Ionized Trimethylamine FT-IR Calibration</u>: Using ATR-FT-IR, approximately 2 drops of each standard solution was deposited onto a sensor. A water spectrum was subtracted from resulting spectra. Area under the curve, from 1440 to 1300 cm$^{-1}$, centered at 1365 cm$^{-1}$, was recorded; a calibration curve was generated, wherein wt% ionized trimethylamine = [Area]/2.6994 (see Table 1C, and Figure 1C).

*Table 1A.* Flux (LMH), calculated for 1st hour of each run, from a flow cell equipped with a feed solution of 3 wt% NaCl, and a draw solution of 66 wt% ionized trimethylamine

| Feed Solution Concentration | Flux at 25°C (LMH) | | | | | |
|---|---|---|---|---|---|---|
| | TCM-1 | | TCM-2 | | TCM-3 | |
| | Trial 1 | Trial 2 | Trial 1 | Trial 2 | Trial 1 | Trial 2 |
| 3 wt% NaCl | 25.6 | 26.5 | 11.6 | 11.0 | 16.8 | 16.5 |
| 9 wt% NaCl | 14.9 | 15.4 | 7.8 | 7.1 | 11.9 | 10.7 |
| 15 wt% NaCl | 10.7 | 10.4 | 5.2 | 5.8 | 8.0 | N/A* |
| *TCM-3 membrane failed during the second trial at 15 wt% NaCl | | | | | | |

Table 1B. Trimethylamine FT-IR Calibration Curve Data

| wt% TMA | Area under Curve |
|---|---|
| 0.045 | 0.004 |
| 0.1 | 0.014 |
| 0.45 | 0.056 |
| 1 | 0.187 |
| 4.5 | 0.854 |

*Table 1C*. Ionized TMA FT-IR Calibration Curve Data

| wt% Ionized TMA | Area under Curve |
|---|---|
| 0.008 | 0.031 |
| 0.015 | 0.068 |
| 0.077 | 0.235 |
| 0.153 | 0.481 |
| 0.767 | 2.233 |
| 1.533 | 4.351 |
| 6.900 | 19.51 |
| 13.80 | 37.70 |
| 34.50 | 92.76 |

*Table 2*. Reverse salt flux values of wt% trimethylamine present in feed solutions, as calculated by GC-FID, for a flow cell equipped with NaCl feed solutions, and a 66 wt% ionized trimethylamine draw solution

| Feed Solution Concentration | Time (min) | wt% TMA (by GC)* | | | | | |
|---|---|---|---|---|---|---|---|
| | | TCM-1[#] | | TCM-2[&] | | TCM-3[#] | |
| | | Trial 1 | Trial 2 | Trial 1 | Trial 2 | Trial 1 | Trial 2 |
| 3 wt% NaCl | 60 | 0.028 | 0.026 | 0.051 | 0.060 | 0.079 | 0.077 |
| | 120 | 0.040 | 0.039 | 0.095 | 0.116 | 0.161 | 0.142 |
| | 180 | 0.060 | 0.040 | 0.255 | 0.124 | 0.184 | 0.215 |
| 9 wt% NaCl | 60 | 0.024 | 0.067 | 0.046 | 0.090 | 0.072 | 0.117 |
| | 120 | 0.039 | 0.190 | 0.071 | 0.091 | 0.122 | 0.244 |
| | 180 | 0.071 | 0.661 | 0.123 | 0.182 | 0.205 | 0.530 |
| 15 wt% NaCl | 60 | 0.036 | 0.090 | 0.044 | 0.046 | 0.091 | ----^ |
| | 120 | 0.051 | 0.084 | 0.056 | 0.051 | 0.178 | |
| | 180 | 0.063 | 0.092 | 0.057 | 0.057 | 0.197 | ---- |

*Average of three injections for each sample. [#] Single membrane used for all runs. [&] Membrane needed to be changed for runs at 15 wt% NaCl. ^ TCM-3 membrane failed during the second trial at 15 wt% NaCl.

*Table 3*. Reverse salt flux values of wt% trimethylamine present in feed solutions, as calculated by GC-FID, for a flow cell equipped with a NaCl feed solution, and a 33 wt% ionized trimethylamine draw solution;

| Feed Solution Concentration | Time (min) | wt% TMA (by GC)* | | | |
|---|---|---|---|---|---|
| | | TCM-1# | | TCM-2# | |
| | | Trial 1 | Trial 2 | Trial 1 | Trial 2 |
| 3 wt% NaCl | 60 | 0.026+ | 0.022 | 0.063 | 0.077 |
| | 120 | 0.026 | 0.025 | 0.113 | 0.116 |
| | 180 | 0.031 | 0.032 | 0.170 | 0.246 |
| * Average of three injections for each sample. + Only two of the three chromatograms showed a peak for TMA. # Fresh membrane used for each run to ensure results were independent of any potential membrane degradation. | | | | | |

*Table 4*. Flux (values (LMH), calculated during 1st hour of flow cell operation, for a FO flow cell equipped with an NaCl or NaCl/CaCl$_2$ comprising feed solution (the NaCl/CaCl$_2$ comprising feed solutions indicated by % total dissolved solids; % TDS) at 25 °C.

| 33 wt% Draw | | | | 66 wt% Draw | | | |
|---|---|---|---|---|---|---|---|
| Feed Conc. (wt%) | Flux @1h (LMH) | | | Feed Conc. (wt%) | Flux @1h (LMH) | | |
| | Trial 1 | Trial 2 | Average | | Trial 1 | Trial 2 | Average |
| 3 % NaCl | 20.3 | 19.6 | 20.0 | 3 % NaCl | 25.6 | 26.5 | 26.1 |
| 6 % TDS | 11.2 | 10.8 | 11.0 | 6 % NaCl | 20.7 | 20.1 | 20.4 |
| 10 % TDS | 6.7 | 6.1 | 6.4 | 6 % TDS | 18.2 | 16.3 | 17.3 |
| | | | | 9 % NaCl | 14.9 | 15.4 | 15.2 |
| | | | | 10 % TDS | 14.4 | 15.6 | 15.0 |

*Table 5*. Reverse salt flux values of wt% ionized trimethylamine present in feed solutions, as calculated by FT-IR, for a FO flow cell equipped with an NaCl or NaCl/CaCl$_2$-comprising feed solution (the NaCl/CaCl$_2$ comprising feed solutions indicated by % total dissolved solids; % TDS);.

| Feed Conc. (wt%) | Draw Conc. (wt% ionized TMA) | Time (min) | wt% Ionized TMA | | |
|---|---|---|---|---|---|
| | | | Trial 1 | Trial 2 | Average |
| 3% NaCl+ | 66 | 60 | 0.02800 | 0.02600 | 0.02700 |
| | | 120 | 0.04000 | 0.03900 | 0.03950 |
| | | 180 | 0.06000 | 0.04000 | 0.05000 |
| 6% NaCl | 66 | 60 | 0.02326 | 0.03144 | 0.02735 |
| | | 120 | 0.04508 | 0.06349 | 0.05429 |
| | | 180 | 0.10781 | 0.11191 | 0.10986 |
| 6% TDS | 66 | 60 | 0.03008 | 0.01985 | 0.02497 |
| | | 120 | 0.03826 | 0.03280 | 0.03553 |
| | | 180 | 0.06758 | 0.06008 | 0.06383 |
| 9% NaCl+ | 66 | 60 | 0.02400 | 0.06700 | 0.04550 |
| | | 120 | 0.03900 | 0.19000 | 0.11450 |
| | | 180 | 0.07100 | 0.66100 | 0.36600 |
| 10% TDS | 66 | 60 | 0.01712 | 0.02121 | 0.01917 |
| | | 120 | 0.02939 | 0.02053 | 0.02496 |
| | | 180 | 0.02121 | 0.02735 | 0.02428 |

(continued)

| Feed Conc. (wt%) | Draw Conc. (wt% ionized TMA) | Time (min) | wt% Ionized TMA | | |
|---|---|---|---|---|---|
| | | | Trial 1 | Trial 2 | Average |
| 6% TDS | 33 | 60 | 0.01166 | 0.00416 | 0.00791 |
| | | 120 | 0.01712 | 0.00894 | 0.01303 |
| | | 180 | 0.01985 | 0.01985 | 0.01985 |
| 10% TDS | 33 | 60 | 0.00553 | 0.00621 | 0.00587 |
| | | 120 | 0.00825 | 0.01439 | 0.01132 |
| | | 180 | 0.01848 | 0.01507 | 0.01678 |
| + Analysis by GC-FID included for comparison | | | | | |

Table 6. Flux values (LMH), calculated during 1st hour of flow cell operation, for a FO flow cell equipped with 6 wt% TDS feed solution and a 66 wt% ionized trimethylamine draw solution, while varying temperature of the feed solution.

| Feed Conc. (wt%) | Feed Temp. (°C) | Draw Temp. (°C) | Flux (LMH) | | |
|---|---|---|---|---|---|
| | | | Trial 1 | Trial 2 | Average |
| 6 % TDS | 3 to 5 | 20 to 22* | 11.43 | 16.00 | 13.71 |
| 6 % TDS | 20 to 22* | 20 to 22* | 18.00 | 20.29 | 19.14 |
| 6 % TDS | 30 to 35 | 20 to 22* | 32.00 | 23.43 | 27.71 |
| 6 % TDS | 3 to 5 | 3 to 5 | 16.29 | 14.29 | 15.29 |
| 6 % TDS | 30 to 35 | 30 to 35 | 24.86 | 22.57 | 23.71 |
| * Temperature not controlled | | | | | |

Table 7. Reverse salt flux values of wt% ionized trimethylamine present in feed solutions, as calculated by FT-IR, for a FO flow cell equipped with 6 wt% TDS feed solution and a 66 wt% ionized trimethylamine draw solution, while varying temperature of the feed solution.

| Feed Conc. (wt%) | Feed Temp. (°C) | Time (min) | wt% Ionized TMA (by FT-IR) | | |
|---|---|---|---|---|---|
| | | | Trial 1 | Trial 2 | Average |
| 6% TDS | 3 to 5 | 60 | 0.01439 | 0.01712 | 0.01576 |
| | | 120 | 0.02735 | 0.02803 | 0.02769 |
| | | 180 | 0.04099 | 0.04985 | 0.04542 |
| 6% TDS | 20 to 22* | 60 | 0.03008 | 0.01985 | 0.02497 |
| | | 120 | 0.03826 | 0.03280 | 0.03553 |
| | | 180 | 0.06758 | 0.06008 | 0.06383 |
| 6% TDS | 30 to 35 | 60 | 0.03008 | 0.01848 | 0.02428 |
| | | 120 | 0.05121 | 0.04235 | 0.04678 |
| | | 180 | 0.06213 | 0.05462 | 0.05838 |
| * Temperature not controlled | | | | | |

*Table 8*. Reverse salt flux values of wt% ionized trimethylamine present in feed solutions, as calculated by FT-IR, for a FO flow cell equipped with 6 wt% TDS feed solution and a 66 wt% ionized trimethylamine draw solution, while varying temperature of the feed and draw solution.

| Feed Conc. (wt%) | Soln. Temp. (°C) | Time (min) | wt% Ionized TMA (by FT-IR) | | |
|---|---|---|---|---|---|
| | | | Trial 1 | Trial 2 | Average |
| 6% TDS | 3 to 5 | 60 | 0.01166 | 0.01303 | 0.01235 |
| | | 120 | 0.02871 | 0.02121 | 0.02496 |
| | | 180 | 0.03553 | 0.03485 | 0.03519 |
| 6% TDS | 20 to 22* | 60 | 0.03008 | 0.01985 | 0.02497 |
| | | 120 | 0.03826 | 0.03280 | 0.03553 |
| | | 180 | 0.06758 | 0.06008 | 0.06383 |
| 6% TDS | 30 to 35 | 60 | 0.02326 | 0.01371 | 0.01848 |
| | | 120 | 0.04576 | 0.03008 | 0.03792 |
| | | 180 | 0.07099 | 0.06963 | 0.07031 |
| * Temperature not controlled | | | | | |

*Table 9.* Flux values (LMH), calculated during 1st hour of flow cell operation, for a FO flow cell equipped with 6 wt% TDS feed solution and a 33 wt% ionized trimethylamine draw solution, while varying pH of the feed solution

| Feed Conc. (wt%) | Soln pH | Flux @1h (LMH) | | |
|---|---|---|---|---|
| | | Trial 1 | Trial 2 | Average |
| 6% TDS | 3 | 11.8 | 14.0 | 12.9 |
| 6% TDS | 5 | 12.4 | 13.1 | 12.8 |
| 6% TDS | 6.5 | 11.2 | 10.8 | 11.0 |
| 6% TDS | 8 | 11.2 | 12.4 | 11.8 |
| 6% TDS | 10 | 14.7 | 14.7 | 14.7 |

*Table 10*. Reverse salt flux values of wt% ionized trimethylamine present in feed solutions, as calculated by FT-IR, for a FO flow cell equipped with 6 wt% TDS feed solution and a 33 wt% ionized trimethylamine draw solution, while varying pH of the feed solution.

| Time (min) | wt% Ionized Trimethylamine (by FT-IR)* | | | | |
|---|---|---|---|---|---|
| | pH 3 | pH 5 | pH 6.5 | pH 8 | pH 10 |
| 60 | 0.01235 | 0.01473 | 0.00791 | 0.01439 | 0.01576 |
| 120 | 0.02462 | 0.02667 | 0.01303 | 0.02667 | 0.03996 |
| 180 | 0.04167 | 0.03690 | 0.01985 | 0.04235 | 0.06861 |
| * wt% Ionized Trimethylamine is an average of two trials | | | | | |

*Table 11*. Flux values (LMH), calculated during 1st hour of flow cell operation, and reverse salt flux values of wt% ionized trimethylamine present in feed solutions, as calculated by FT-IR, for a FO flow cell equipped with <1 wt% TDS wastewater feed solution and a 66 wt% ionized trimethylamine draw solution.

| Feed Solution | Average Flux (LMH) | Average Reverse salt flux (mg/L) |
|---|---|---|
| Brackish | 34 | 1160 |
| Deoiled* | 35 | 1060 |

(continued)

| Feed Solution | Average Flux (LMH) | Average Reverse salt flux (mg/L) |
|---|---|---|
| WAC^ | 36 | 480 |

\* Post-skim water, prior to softening (oil content ~2 ppm)
^ Weak acid cation exchanged, post-softening

Table 12: Initial ICP-OES analysis (from Caduceon) of mining tailing samples, prior to FO treatment.

| Analyte | Initial solids content of 'dry' tailings sample (µg/g) | Extracted solids from 'dry' tailings sample (µg/g) | Isolated feed solution from 'dry' tailings sample (mg/L) |
|---|---|---|---|
| Al | 1340 | 1220 | < 0.01 |
| As | 9570 | 12000 | 10.8 |
| Cd | 87.4 | 113 | < 0.005 |
| Ca | 520 | 770 | 1.05 |
| Cr | 70 | 58 | 0.035 |
| Co | 115 | 150 | 1.38 |
| Cu | 706 | 642 | 33.1 |
| Fe | 24800 | 30100 | 6.87 |
| Pb | 35 | 30 | 0.02 |
| Mg | 410 | 410 | 1.88 |
| Ni | 90 | 118 | 0.8 |
| P | 271 | 244 | 0.1 |
| K | 160 | 140 | 4.4 |
| Si | 237 | 239 | 6.12 |
| Na | 230 | 210 | 13.1 |
| | | | |

Table 13: ICP-OES analysis (from Caduceon) of mining tailing feed solutions, following FO treatment.

| Analyte | Initial Feed (mg/L) | Trial 1 | | Trial 2 | |
|---|---|---|---|---|---|
| | | Feed After FO (mg/L) | Recovered Water (mg/L) | Feed After FO (mg/L) | Recovered Water (mg/L) |
| Al | < 0.01 | 88.5 | 0.06 | 16.8 | 0.1 |
| As | 10.8 | 83.4 | 0.25 | 10.4 | 0.04 |
| Cd | < 0.005 | < 0.005 | < 0.005 | < 0.005 | < 0.005 |
| Ca | 1.05 | 12.42 | 1.12 | 2.74 | 1.21 |
| Cr | 0.035 | 0.36 | < 0.002 | 0.035 | < 0.002 |
| Co | 1.38 | 10.14 | 0.047 | 2.21 | 0.076 |
| Cu | 33.1 | 296.1 | 0.14 | 62.4 | 0.473 |
| Fe | 6.87 | 51.9 | 0.155 | 4.26 | 0.054 |
| Pb | 0.02 | 0.21 | < 0.02 | < 0.02 | < 0.02 |
| Mg | 1.88 | 15.87 | 0.63 | 3.74 | 0.82 |

(continued)

| Analyte | Initial Feed (mg/L) | Trial 1 | | Trial 2 | |
|---|---|---|---|---|---|
| | | Feed After FO (mg/L) | Recovered Water (mg/L) | Feed After FO (mg/L) | Recovered Water (mg/L) |
| Ni | 0.8 | 5.97 | 0.04 | 1.23 | 0.04 |
| P | 0.1 | 1.8 | < 0.1 | 0.1 | < 0.1 |
| K | 4.4 | 29.1 | 1.7 | 8.8 | 1.9 |
| Si | 6.12 | 56.4 | 2.84 | 11.3 | 3.29 |
| SiO2 | 13.1 | 120.3 | 6.07 | 24.1 | 7.04 |
| Na | 1.8 | 18.3 | 8.6 | 9.5 | 7.1 |
| Hardness (as $CaCO_3$) | 10 | 96 | 5 | 22 | 6 |

*Table 14*: Flux values (LMH), calculated during 1st hour of flow cell operation, for a FO flow cell equipped with a mining tailings feed solution, and a 66 wt% ionized trimethylamine draw solution.

| FO Run | Flux at 25 °C $(Lm^{-2}h^{-1})^\wedge$ | % Reduction[a] |
|---|---|---|
| Trial 1 | 23.6 | 90.95 |
| Trial 2 | 25.2 | 58.03[b] |
| [a] Based on mass reduction of feed within first hour of FO flow cell operation. [b] Precipitates formed during both trials; without wishing to be bound by theory, it was considered that enough precipitate may have formed to foul the membrane and account for the lower % reduction. | | |

*Table 15*: Reverse salt flux (reverse salt flux) values of wt% ionized trimethylamine present in feed solutions, as calculated by FT-IR, for a FO flow cell equipped with a mining tailings feed solution and a 66 wt% ionized trimethylamine draw solution, over 48 hours.

| Sample | Time (h) | wt% Ionized TMA (by FT-IR) | Reverse Salt Flux (g/m²/h) | Sample | Time (h) | wt% Ionized TMA (by FT-IR) | Reverse Salt Flux (g/m²/h) |
|---|---|---|---|---|---|---|---|
| T1 | 1 | 0.06409 | 236.24 | T2 | 1 | 0.03260 | 121.68 |
| | 2 | 0.05372 | 95.89 | | 2 | 0.02890 | 52.61 |
| | 3 | 0.07668 | 88.87 | | 3 | 0.04334 | 51.84 |
| | 4 | 0.09817 | 83.03 | | 4 | 0.07113 | 63.09 |
| | 5 | 0.12744 | 84.01 | | 5 | 0.09039 | 63.42 |
| | 6 | 0.13892 | 74.30 | | 6 | 0.11373 | 65.74 |
| | 7 | 0.15633 | 69.73 | | 22 | 0.58272 | 76.12 |
| | 11 | 0.27821 | 70.37 | | 30 | 0.84723 | 72.32 |
| | 23 | 0.77906 | 61.79 | | 48 | 1.70186 | 58.90 |
| | 46 | 3.89309 | 29.84 | | | | |

Table 16: Analysis of select parameters from received concentrated municipal wastewater analysis pre- and post-FO treatment

| Parameter | Units | Received analysis [d] | Acceptable levels after FO treatment | Independent analysis [e] | Recovered water [c] | |
|---|---|---|---|---|---|---|
| | | | | | Trial 1 | Trial 2 |
| Residual Draw Solute | mg/L | ---- | ---- | ---- | 1126 | 1378 |
| Conductivity | μS/cm | 8478 | < 400 | 10800 | 107 [a] | 218 [a] |
| $NH_3/NH_4^+$ | mg/L | 0 | < 1 | 2.56 | < 0.01 [a] | 0.01 [a] |
| Total P | mg/L | 6 | < 0.4 | 5.1 | 0.5 [a] | < 0.1 [a] |
| COD | mg/L | 147 | < 30 | 38 | 74 [b] | 119 [b] |

[a] Values are corrected for concentration in draw solution; [b] Values are not corrected for concentration in draw solution; [c] Recovered from dilute draw after draw solute removal; [d] Analysis of municipal wastewater received with sample; [e] Received sample of municipal wastewater was sent out for independent analysis by Caduceon prior to FO treatment

Table 17: Analysis of select parameters from received produced wastewaters pre- and post-FO treatment

| Parameter | Initial Feed Solution | Recovered Water [a] |
|---|---|---|
| Residual Draw Solute (ppm) | ---- | 734 |
| Conductivity (μS/cm) | 191000 | 894 |
| pH | 6.47 | 9.45 |
| TDS (ppm)[b] | 199000 | 507 |
| %TDS Rejection | ---- | 99.9% |

[a] Recovered water from dilute draw solution after removal of draw solute; [b] Analysis was completed at Queen's Analytical Services Unit

Table 18: ICP-OES analysis (from Caduceon) of received produced wastewaters pre- and post-FO treatment

| Element (mg/L) | Unfiltered | Filtered | Post Double Softening | Post FO Process-Double Softening | Post FO Process-Single Softening | Recovered Water |
|---|---|---|---|---|---|---|
| Aluminum | 0.35 | 0.15 | 3.74 | 0.17 | N.D. | 0.13 |
| Barium | 2.15 | 2.25 | 0.707 | 0.627 | 0.653 | 0.009 |
| Boron | 32.7 | 35.1 | 34.7 | 34.9 | 40.1 | 1.12 |
| Calcium | 5930 | 5500 | 254 | 423 | 1195 | 1.11 |
| Chromium | 0.008 | < 0.002 | < 0.2 | 0.002 | 0.003 | < 0.002 |
| Copper | 0.004 | 0.002 | 0.489 | 0.291 | 0.079 | 0.007 |
| Iron | 13.9 | 0.183 | 4.31 | 0.051 | N.D. | 0.035 |
| Lithium | 41.3 | 45.4 | 29.9 | 48.6 | N.D. | N.D. |
| Magnesium | 893 | 836 | 496 | 313 | 487 | 0.22 |
| Manganese | 1.42 | 1.33 | 0.829 | 0.004 | N.D. | 0.002 |
| Phosphorous | 1.0 | 0.4 | < 10 | 0.1 | 0.3 | < 0.1 |
| Potassium | 2370 | 2230 | 2520 | 3580 | 3275 | 4.2 |
| Silica | 25.3 | 14.6 | 3.96 | 0.54 | 17.9 | 9.55 |

(continued)

| Element (mg/L) | Unfiltered | Filtered | Post Double Softening | Post FO Process-Double Softening | Post FO Process-Single Softening | Recovered Water |
|---|---|---|---|---|---|---|
| Silicon | 11.8 | 6.82 | 1.85 | 0.25 | 8.35 | 4.46 |
| Silver | 0.21 | 0.036 | 1.8 | 0.050 | 0.048 | < 0.005 |
| Sodium | 57600 | 53800 | 66800 | 41550 | 88150 | 68.4 |
| Strontium | 77.2 | 77.3 | 53.6 | 123.5 | 258 | N.D. |
| Zinc | 0.42 | 0.061 | 2.15 | 0.079 | 0.088 | 0.4 |
| Hardness (as $CaCO_3$) | 18500 | 17200 | 2670 | 2340 | 4990 | N.D. |
| TDS | 199000 | N.D. | 186000 | 264000 | 266500 | 507 |

*Table 19*: Flux values (LMH), calculated during 1st hour of flow cell operation, for a FO flow cell equipped with a flowback wastewater feed solution, and a 66 wt% ionized trimethylamine draw solution

| FO Run | Flux at 25 °C ($Lm^{-2}h^{-1}$) | % Reduction |
|---|---|---|
| Trial 1 | 15.1 | 39.2 |
| Trial 2 | 15.0 | 43.0 |

*Table 20*: Analysis of select parameters for flowback wastewater pre- and post-FO treatment

| Parameter | Initial Feed Solution | Recovered Water |
|---|---|---|
| Residual Draw Solute (ppm) | ---- | 1071 |
| Conductivity ($\mu$S/cm) | 130400 | 1213 |
| pH | 6.38 | 9.40 |
| TOC (ppm)[a] | 762 | 314 |
| TDS (ppm)[a] | 132000 | 681 |
| %TDS Rejection | --- | 99.6% |
| % TOC Rejection | --- | 68.5% |
| [a] Analysis was completed at Queen's Analytical Services Unit | | |

*Table 21*: ICP-OES analysis (from Caduceon) of received flowback wastewaters pre- and post-FO treatment

| Element (mg/L) | Feed Solution Pre FO | Recovered Water T1 | Recovered Water T2 | Control Recovered Water |
|---|---|---|---|---|
| Barium | 3.19 | 0.008 | 0.008 | 0.006 |
| Boron | 25.8 | 2.18 | 2.02 | 0.171 |
| Calcium | 4900 | 1.44 | 1.09 | 0.79 |
| Chromium | 0.016 | < 0.002 | < 0.002 | 0.002 |
| Copper | 0.012 | 0.011 | 0.004 | 0.022 |
| Magnesium | 488 | 0.31 | 0.2 | 0.19 |
| Potassium | 1580 | 9.9 | 8.5 | 1.4 |

(continued)

| Element (mg/L) | Feed Solution Pre FO | Recovered Water T1 | Recovered Water T2 | Control Recovered Water |
|---|---|---|---|---|
| Silicon | 19.6 | 4.08 | 3.44 | 3.83 |
| Silica | 41.9 | 8.73 | 7.37 | 8.2 |
| Silver | 0.062 | < 0.005 | < 0.005 | < 0.005 |
| Sodium | 31100 | 108 | 94.5 | 11.1 |
| Strontium | 288 | 0.035 | 0.024 | 0.006 |
| Zinc | 0.356 | 0.156 | 0.102 | 0.368 |
| Hardness (as $CaCO_3$) | 14300 | 5 | 4 | 3 |
| TDS | 132000 | 940 | 422 | 118 |
| TOC | 762 | 327 | 300 | 490 |

Table 23. Maximum temperature for carbonation of 50 mL of 45% TMA under various dynamic pressures of carbon dioxide.

| $CO_2$ Pressure (bar) | Initial Temperature (°C) | Maximum Temperature (°C) | Temperature Rise (°C) | Time to Reach Maximum Temperature (h) |
|---|---|---|---|---|
| 1 | 19 | 23 | 4 | 3 |
| 5 | 18 | 30 | 12 | 1 |
| 9 | 19 | 40 | 21 | 0.5 |

Table 24. Flux values (LMH), calculated during 1st hour of flow cell operation, and reverse salt flux values of wt% ionized trimethylamine present in feed solutions, as calculated by FT-IR, for a FO flow cell equipped with a 12.5 wt% NaCl draw solution and a 3 wt% NaCl feed solution, in a large scale FO flow cell.

| Feed Solution | Draw Solution | Average Flux (LMH) | Reverse salt flux (wt%) at 60 min | Comparative Small Scale FO Cell |
|---|---|---|---|---|
| 3 wt% NaCl | 12.5 wt% NaCl | 13[1] | --- | Flux Average: 19 LMH |
| 3 wt% NaCl | 33 wt% Ionized TMA | 12.4 | 0.0656 | |
| [1] Average of 2 runs | | | | |

Table 22: FO treatment of simulated and actual feed solutions with ionized TMA draw solutions in flow cell using hollow-fibre module membranes

| Membrane | Feed | Draw | Flux (L/m$^2$/h) | Flux[3] (L/m$^2$/h/bar) | % NaCl Rejection | Time (min) | wt% Ionized TMA (by FT-IR) | RSF (g/m$^2$/h) | RSF (mol/m$^2$/h) | % Reduction Feed Solution Mass[b] |
|---|---|---|---|---|---|---|---|---|---|---|
| HFM-1-T1 | 3 wt% NaCl | 34.5 wt% Ionized TMA | 4.51 | 5.01 | 98.9 | 60 | 0.0537 | 6.31 | 0.0521 | 65.49 |
| | | | | | | 120 | 0.0589 | 2.28 | 0.0188 | |
| | | | | | | 160 | 0.0822 | 1.72 | 0.0142 | |
| HFM-1-T2 | 15 wt% NaCl | 66 wt% Ionized TMA | 1.54 | 1.93 | 99.1 | 60 | 0.1004 | 15.24 | 0.1258 | 22.59 |
| | | | | | | 120 | 0.1204 | 8.27 | 0.0682 | |
| | | | | | | 160 | 0.1260 | 6.12 | 0.0505 | |
| HFM-1-T3 | 3 wt% NaCl | 34.5 wt% Ionized TMA | 4.19 | 4.66 | 97.4 | 60 | 0.0256 | 3.00 | 0.0248 | 87.98[c] |
| | | | | | | 120 | 0.0641 | 2.56 | 0.0211 | |
| | | | | | | 180 | 0.1015 | 1.69 | 0.0140 | |
| | | | | | | 240 | 0.1715 | 1.29 | 0.0106 | |
| | | | | | | 300 | 0.3171 | 1.21 | 0.0099 | |
| | | | | | | 350 | 0.5412 | 1.40 | 0.0116 | |
| HFM-1-T4 | Softened Produced Water | 66 wt% Ionized TMA | 1.11 | 1.59 | 98.6 | 60 | 0.0345 | 5.38 | 0.0444 | 27.25[d] |
| | | | | | | 120 | 0.0533 | 390 | 0.0322 | |
| | | | | | | 180 | 0.0826 | 3.78 | 0.0312 | |
| | | | | | | 240 | 0.1148 | 3.71 | 0.0306 | |
| | | | | | | 300 | 0.1408 | 3.43 | 0.0283 | |
| HFM-1-T5 | Flowback | 66 wt% Ionized TMA | 2.31 | 2.72 | 96.2 | 120 | 0.1263 | 7.38 | 0.0609 | 59.10[e] |
| | | | | | | 180 | 0.1226 | 4.14 | 0.0342 | |
| | | | | | | 240 | 0.1419 | 3.14 | 0.0259 | |
| | | | | | | 300 | 0.1385 | 2.16 | 0.0178 | |
| | | | | | | 360 | 0.1160 | 1.33 | 0.0110 | |
| | | | | | | 390 | 0.1315 | 1.32 | 0.0109 | |

(continued)

| Membrane | Feed | Draw | Flux (L/m$^2$/h) | Flux$^3$ (L/m$^2$/h/bar) | % NaCl Rejection | Time (min) | wt% Ionized TMA (by FT-IR) | RSF (g/m$^2$/h) | RSF (mol/m$^2$/h) | % Reduction Feed Solution Mass[b] |
|---|---|---|---|---|---|---|---|---|---|---|
| HFM-2-1-T1 | 3 wt% NaCl | 34.5 wt% Ionized TMA | 3.82 | 5.46 | 99.3 | 60 | 0.0752 | 5.61 | 0.0463 | 79.76 |
| | | | | | | 120 | 0.1582 | 3.50 | 0.0289 | |
| | | | | | | 180 | 0.3742 | 3.07 | 0.0254 | |

[a] Refers to pressure at the draw solution inlet; [b] Based on the mass reduction of the feed solution; [c] Over a six hour time period; [d] Over a five hour time period; [e] Over a six hour and 30 minute time period

Table 25: % TDS rejection calculated for FO treated brackish, deoiled, and weak-acid cation exchange-treated process water, as determined by ICP-OES analysis

**Brackish Water**

| Sample (Results in µg/g) | Blank | Initial Process Water* | Simulated 69 wt% Draw After FO and TMA Removal | FO with 34.5 wt% Draw | | | | FO with 69 wt% Draw | | | |
|---|---|---|---|---|---|---|---|---|---|---|---|
| | | | | Trial 1 Feed (After FO) | Trial 1 Draw (After FO) | Trial 2 Feed (After FO) | Trial 2 Draw (After FO) | Trial 1 Feed (After FO) | Trial 1 Draw (After FO) | Trial 2 Feed (After FO) | Trial 2 Draw (After FO) |
| B | <1.0 | 4.4 | <1.0 | 5.7 | 1.6 | 5.9 | 1.2 | 7.3 | 2.2 | 6.2 | 2 |
| Ba | <0.05 | 5.0 | <0.05 | 8.5 | 0.16 | 8.6 | 0.084 | 8.3 | 0.17 | 9.4 | 0.13 |
| Ca | <0.05 | 26 | 0.5 | 46 | 0.90 | 47 | 0.58 | 32 | 0.99 | 52 | 1 |
| Fe | <0.05 | 1.4 | 0.23 | 1.4 | 0.20 | 1.3 | 0.082 | 1.4 | 0.28 | 1.2 | 0.27 |
| K | <0.2 | 13 | 0.2 | 22 | 1.4 | 22 | 1 | 30 | 2.0 | 26 | 1.7 |
| Mg | <0.05 | 22 | 0.11 | 38 | 0.63 | 39 | 0.33 | 50 | 0.54 | 42 | 0.59 |
| Na | <1.0 | 2600 | <1.0 | 4300 | 190 | 4300 | 110 | 6000 | 240 | 4900 | 200 |
| Pb | <0.03 | 0.038 | <0.03 | 0.032 | <0.03 | <0.03 | <0.03 | <0.03 | <0.03 | 0.033 | <0.03 |
| Sr | <0.01 | 3.4 | <0.01 | 5.7 | 0.095 | 5.7 | 0.042 | 6.5 | 0.078 | 6.1 | 0.072 |
| Zn | <0.01 | 0.021 | 0.94 | 0.058 | 0.73 | 0.052 | 0.44 | 0.023 | 0.84 | 0.062 | 1.1 |
| Total (µg/g) | | 2675.3 | 2.0 | 4427.4 | 195.7 | 4429.6 | 113.8 | 6135.5 | 247.1 | 5043.0 | 206.9 |
| % Rejection TDS | ---- | ---- | ---- | 97.07 | | 97.62 | | 94.46 | | 97.29 | |
| % Reverse Salt Flux | ---- | ---- | ---- | 99.74 | | 99.79 | | 99.69 | | 99.82 | |
| | | | | | | | | | | | |
| **Water After Oil Skimming Process (Deoiled)** | | | | | | | | | | | |
| | Blank | | Simulated 69 wt% | FO with 34.5 wt% Draw | | | | FO with 69 wt% Draw | | | |

(continued)

| Sample (Results in ug/g) | Blank | Initial Process Water* | Draw After FO and TMA Removal | Trial 1 Feed (After FO) | Trial 1 Draw (After FO) | Trial 2 Feed (After FO) | Trial 2 Draw (After FO) | Trial 1 Feed (After FO) | Trial 1 Draw (After FO) | Trial 2 Feed (After FO) | Trial 2 Draw (After FO) |
|---|---|---|---|---|---|---|---|---|---|---|---|
| As | <0.03 | 0.045 | <0.03 | 0.073 | <0.03 | 0.073 | <0.03 | 0.11 | <0.03 | 0.12 | <0.03 |
| B | <1.0 | 22 | <1.0 | 31 | 5.6 | 31 | 5.8 | 41 | 5.5 | 39 | 6.6 |
| Ba | <0.05 | 0.41 | <0.05 | 0.64 | <0.05 | 0.72 | <0.05 | 0.93 | <0.05 | 0.97 | <0.05 |
| Ca | <0.05 | 12 | 0.5 | 19 | 0.23 | 19 | 0.29 | 28 | 0.23 | 29 | 0.39 |
| Fe | <0.05 | 1.5 | 0.23 | 2.5 | 0.089 | 2.2 | 0.094 | 3.7 | 0.14 | 4.0 | 0.10 |
| K | <0.2 | 22 | 0.2 | 38 | 2.0 | 39 | 1.8 | 55 | 1.7 | 52 | 2.4 |
| Mg | <0.05 | 6.8 | 0.11 | 9.8 | 0.11 | 9.6 | 0.095 | 14 | 3.6^ | 14 | 0.22 |
| Na | <1.0 | 640 | <1.0 | 920 | 24 | 940 | 21 | 1200 | 20 | 1200 | 36 |
| S | <1.0 | 30 | <1.0 | 47 | <1.0 | 46 | <1.0 | 68 | <1.0 | 71 | <1.0 |
| Sr | <0.01 | 0.26 | <0.01 | 0.39 | <0.01 | 0.42 | <0.01 | 0.59 | <0.01 | 0.60 | <0.01 |
| Zn | <0.01 | <0.01 | 0.94 | 0.027 | 0.063 | 0.32 | 0.062 | 0.069 | 0.14 | 0.071 | 0.10 |
| Total (µg/ml) | | 735.02 | 1.98 | 1068.43 | 32.09 | 1088.33 | 29.14 | 1410.89 | 27.71 | 1410.76 | 45.81 |
| % Rejection TDS | ---- | ---- | ---- | 97.64 | | 98.02 | | 96.98 | | 96.20 | |
| % Reverse Salt Flux | ---- | ---- | ---- | 99.76 | | 99.80 | | 99.81 | | 99.80 | |

Water after Weak Acid Cation Exchange Column

| Sample (Results in ug/g) | Blank | Initial Process Water* | Simulated 69 wt% Draw After FO and TMA Removal | FO with 34.5 wt% Draw | | | | FO with 69 wt% Draw | | | |
|---|---|---|---|---|---|---|---|---|---|---|---|
| | | | | Trial 1 Feed (After FO) | Trial 1 Draw (After FO) | Trial 2 Feed (After FO) | Trial 2 Draw (After FO) | Trial 1 Feed (After FO) | Trial 1 Draw (After FO) | Trial 2 Feed (After FO) | Trial 2 Draw (After FO) |
| As | <0.03 | 0.044 | <0.03 | 0.083 | <0.03 | 0.075 | <0.03 | 0.094 | <0.03 | 0.11 | <0.03 |

(continued)

| Water after Weak Acid Cation Exchange Column | | | | | | | | | | | |
|---|---|---|---|---|---|---|---|---|---|---|---|
| | | | | FO with 34.5 wt% Draw | | | | FO with 69 wt% Draw | | | |
| Sample (Results in ug/g) | Blank | Initial Process Water* | Simulated 69 wt% Draw After FO and TMA Removal | Trial 1 Feed (After FO) | Trial 1 Draw (After FO) | Trial 2 Feed (After FO) | Trial 2 Draw (After FO) | Trial 1 Feed (After FO) | Trial 1 Draw (After FO) | Trial 2 Feed (After FO) | Trial 2 Draw (After FO) |
| B | <1.0 | 22 | <1.0 | 34 | 4.9 | 33 | 4.3 | 38 | 4.8 | 42 | 5.2 |
| Ca | <0.05 | 0.077 | 0.5 | 2.3 | 0.095 | 5.2 | 0.12 | 0.41 | 0.35 | 0.41 | 0.13 |
| Fe | <0.05 | 1.6 | 0.23 | 3.5 | 0.089 | 3.1 | 0.056 | 4.0 | 0.083 | 4.4 | 0.13 |
| K | <0.2 | 24 | 0.2 | 47 | 2.9 | 44 | 2.7 | 49 | 2.9 | 56 | 2.5 |
| Mg | <0.05 | <0.05 | 0.11 | 0.12 | <0.05 | 0.097 | <0.05 | 0.16 | <0.05 | 0.20 | 0.31 |
| Na | <1.0 | 700 | <1.0 | 1200 | 48 | 1100 | 45 | 1300 | 50 | 1500 | 38 |
| | | | | | | | | | | | |
| S | <1.0 | 38 | <1.0 | 78 | <1.0 | 69 | <1.0 | 82 | <1.0 | 91 | <1.0 |
| Zn | <0.01 | 0.011 | 0.94 | 0.051 | 0.057 | 0.053 | 0.042 | 0.041 | 0.090 | 0.060 | 0.10 |
| Total ($\mu$g/ml) | | 785.73 | 1.98 | 1365.05 | 56.04 | 1254.53 | 52.17 | 1473.71 | 58.22 | 1694.18 | 46.37 |
| % Rejection TDS | ---- | ---- | ---- | 95.08 | | 95.39 | | 95.55 | | 96.22 | |
| % Reverse Salt Flux | ---- | ---- | ---- | 99.71 | | 99.80 | | 99.84 | | 99.90 | |
| * Average of Two Runs; ^ Removed From Average | | | | | | | | | | | |

EP 4 071 117 A1

All publications, patents and patent applications mentioned in this Specification are indicative of the level of skill of those skilled in the art to which this invention pertains and are herein incorporated by reference to the same extent as if each individual publication, patent, or patent applications was specifically and individually indicated to be incorporated by reference.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims. Other aspects and features of the present invention are disclosed in the following clauses.

1. A process for treating an aqueous feed stream, comprising:

forward osmosis using an aqueous draw solution having a draw solute concentration of ≥20 wt%, wherein the draw solute comprises ionized trimethylamine and a counter ion;
wherein, the feed stream:

i) comprises ≥5wt% total dissolved solids;
ii) is at a temperature of ≤20°C;
iii) is at a temperature between ≥30°C - ≤60°C;
iv) has an acidic pH or a basic pH;
v) comprises organic content;
vi) comprises suspended solids; or
vii) any combination of two or more of i) - vi).

2. The process of clause 1, wherein said forward osmosis comprises:

a. introducing the feed stream to one side of a semi-permeable membrane that is selectively permeable to water;
b. introducing the draw solution to the other side of the semi-permeable membrane;
c. permitting flow of water from the feed solution through the semi-permeable membrane into the draw solution to form a concentrated feed solution and a dilute draw solution.

3. The process of clause 2, further comprising:

a. isolating the draw solute from the dilute draw solution; and
b. reconstituting the concentrated draw solution from the isolated draw solute.

4. The process of any one of clauses 1 - 3, wherein the process is:

i) a closed process;
ii) a continuously cycled process; or
iii) a combination thereof.

5. The process of clause 3, wherein separating the draw solute from the dilute draw solution comprises: reverse osmosis; volatilization; heating; a flushing gas; a vacuum or partial vacuum; agitation; or any combination thereof.

6. The process of clause 3, wherein reconstituting the concentrated draw solution comprises:

a. introducing an ionizing trigger, such as carbon dioxide, to an aqueous solution of trimethylamine;
b. introducing trimethylamine to an aqueous solution of an ionizing trigger, such as carbon dioxide;
c. simultaneously introducing trimethylamine and an ionizing trigger such as carbon dioxide to an aqueous solution; or
d. any combination thereof

7. The process of any one of clauses 1 - 6, wherein the feed solution comprises between 5 - 30wt% total dissolved solids; or, alternatively, between 5 - 25wt% total dissolved solids; or, alternatively, between 5 - 20wt% total dissolved solids; or, alternatively, between 5 -15wt% total dissolved solids; or, alternatively, between 5 - 10wt% total dissolved solids; or, alternatively, between 6 - 10wt% total dissolved solids.

8. The process of clause 7, wherein the total dissolved solids comprise metal oxides; minerals; monovalent ions;

divalent ions; trivalent ions; or any combination thereof.

9. The process of any one of clauses 1 - 6, wherein the feed solution is at a temperature between 0 - 15°C; or, alternatively, between 0 - 10°C; or, alternatively between 0 - 5°C; or, alternatively, between 3 - 5°C.

10. The process of any one of clauses 1 - 6, wherein the feed solution is at a temperature between 30 - 60°C; or, alternatively, 30 - 50°C; or, alternatively, 30 - 40°C; or, alternatively, 30 - 35°C.

11. The process of any one of clauses 1 - 6, wherein the feed solution has a pH $\leq$ 6; or, alternatively, $\leq$ 5; or, alternatively, $\leq$ 3.

12. The process of any one of clauses 1 - 6, wherein the feed solution has a pH $\geq$ 8; or, alternatively, $\geq$ 9; or, alternatively, $\geq$ 11.

13. The process of any one of clauses 1 - 6, wherein the organic content of the feed solution comprises suspended or solubilized organic compounds, carbohydrates, polysaccharides, proteins, algae, viruses, plant matter, animal matter, or any combination thereof.

14. The process of any one of clauses 1 - 6, wherein the feed solution comprises suspended solids.

15. The process of any one of clauses 1 - 14, wherein the feed solution is hard water, process water, produced water, flowback water, wastewater, or any combination thereof.

16. The process of any one of clauses 1 - 15, wherein the draw solution has a draw solute concentration between $\geq$ 30wt% to saturation; or, alternatively, between 30 - 70wt%; or, alternatively, between 30 - 60wt%; or, alternatively, between 30 - 50wt%; or, alternatively, between 30 - 40wt%.

17. The process of clause 16, wherein the draw solution has a draw solute concentration between 30 - 40wt%; or, alternatively, between 60 - 70wt%.

18. The process of any one of clauses 1 - 17, wherein the feed stream is a complex feed stream that comprises $\geq$5wt% total dissolved solids and (i) organic content; (ii) suspended solids; or (iii) both organic content and suspended solids.

19. A forward osmosis system, comprising:

an aqueous draw solution having a draw solute concentration of $\geq$20 wt%, the draw solute comprising ionized trimethylamine and a counterion; and
at least one forward osmosis element, comprising

a semi-permeable membrane that is selectively permeable to water, having a first side and a second side;
at least one port to bring a feed solution in fluid communication with the first side of the membrane; and
at least one port to bring the draw solution in fluid communication with the second side of the membrane,

wherein water flows from the feed solution through the semi-permeable membrane into the draw solution to form a concentrated feed solution and a diluted draw solution.

20. The forward osmosis system of clause 19, further comprising a system for regenerating the draw solution, comprising

a. means for isolating the draw solutes or non-ionized forms of the draw solutes from the dilute draw solution;
b. means for reconstituting the draw solution from the isolated draw solutes or the non-ionized forms of the draw solutes.

21. The forward osmosis system of clause 19 or 20, wherein the system is:

iv) closed;
v) continuously cycled; or

vi) a combination thereof.

22. The forward osmosis system of clause 20, wherein means for isolating the draw from the solute dilute draw solution comprises:

a reverse osmosis system; volatilization; heating; a flushing gas; a vacuum or partial vacuum; agitation; or any combination thereof.

23. The forward osmosis system of clause 20, wherein means for reconstituting the draw solution from the isolated draw solutes or the non-ionized forms of the draw solutes comprises:

a. means for introducing an ionizing trigger, such as carbon dioxide, to an aqueous solution of trimethylamine;
b. means for introducing trimethylamine to an aqueous solution of an ionizing trigger, such as carbon dioxide;
c. means for simultaneously introducing trimethylamine and an ionizing trigger such as carbon dioxide to an aqueous solution; or
d. any combination thereof

24. The forward osmosis system of any one of clauses 19 - 23, wherein the feed solution comprises between 5 - 30wt% total dissolved solids; or, alternatively, between 5 - 25wt% total dissolved solids; or, alternatively, between 5 - 20wt% total dissolved solids; or, alternatively, between 5 - 15wt% total dissolved solids; or, alternatively, between 5 - 10wt%; or, alternatively, between 6 - 10wt% total dissolved solids.

25. The forward osmosis system of clause 24, wherein the total dissolved solids comprise metal oxides; minerals; monovalent ions; divalent ions; trivalent ions; or a combination thereof.

26. The forward osmosis system of any one of clauses 19 - 23, wherein the feed solution is at a temperature between 0 - 15°C; or, alternatively, between 0 - 10°C; or, alternatively between 0 - 5°C; or, alternatively, between 3 - 5°C.

27. The forward water system of any one of clauses 19 - 23, wherein the feed solution is at a temperature between 30 - 60°C; or, alternatively, 30 - 50°C; or, alternatively, 30 - 40°C; or, alternatively, 30 - 35°C.

28. The forward osmosis system of any one of clauses 19 - 23, wherein the feed solution has a pH $\leq$ 6; or, alternatively, $\leq$ 5; or, alternatively, $\leq$ 3.

29. The forward osmosis system of any one of clauses 19 - 23, wherein the feed solution has a pH $\geq$ 8; or, alternatively, $\geq$ 9; or, alternatively, $\geq$ 11.

30. The forward osmosis system of any one of clauses 19 - 23, wherein the feed solution comprises organic content.

31. The forward osmosis system of clause 30, wherein the organic content comprises suspended or solubilized organic compounds, carbohydrates, polysaccharides, proteins, algae, viruses, plant matter, animal matter, or any combination thereof.

32. The forward osmosis system of any one of clauses 19 - 23, wherein the feed solution comprises suspended solids.

33. The forward osmosis system of any one of clauses 19 - 32, wherein the feed solution is hard water, process water, produced water, flow-back water, wastewater, or any combination thereof.

34. The forward osmosis system of any one of clauses 19 - 33, wherein the draw solution has a draw solute concentration between $\geq$ 30wt% and saturation; or, alternatively, between 30 - 70wt%; or, alternatively, between 30 - 60wt%; or, alternatively, between 30 - 50wt%; or, alternatively, between 30 - 40wt%.

35. The forward osmosis system of clause 34, wherein the draw solution has a draw solute concentration between 30 - 40wt%; or, alternatively, between 60 - 70wt%.

36. The forward osmosis system of any one of clauses 19 - 35, wherein the feed stream is a complex feed stream that comprises $\geq$5wt% total dissolved solids and (i) organic content; (ii) suspended solids; or (iii) both organic content and suspended solids.

37. A draw solution for a forward osmosis process, comprising:

a. water;
b. ionized trimethylamine at a concentration of ≥ 20wt%; and
c. an anionic species at a concentration suitable to act as a counter ion for the ionized trimethylamine.

38. The draw solution of clause 37, wherein the ionized trimethylamine is present at a concentration of between ≥ 30wt% and saturation; or, alternatively, between 30 - 70wt%; or, alternatively, between 30 - 60wt%; or, alternatively, between 30 - 50wt%; or, alternatively, between 30 - 40wt%.

39. The draw solution of clause 37 or 38, wherein the anionic species is carbonate, bicarbonate, or a combination thereof.

40. The draw solution of clause 39, wherein the source of the anionic species is $CO_2$ gas.

**Claims**

1. A process for treating an aqueous feed stream, comprising:

forward osmosis using an aqueous draw solution having a draw solute concentration between 60 - 70wt%, wherein the draw solute comprises ionized trimethylamine and a counter ion such as carbonate, bicarbonate, or a combination thereof; and
wherein the feed stream comprises ≥5wt% total dissolved solids.

2. The process of claim 1, wherein said forward osmosis comprises:

a. introducing the feed stream to one side of a semi-permeable membrane that is selectively permeable to water;
b. introducing the draw solution to the other side of the semi-permeable membrane; and
c. permitting flow of water from the feed stream through the semi-permeable membrane into the draw solution to form a concentrated feed stream and a dilute draw solution.

3. The process of claim 1 or 2, further comprising:

d. isolating the draw solute from the dilute draw solution, thereby forming a purified water stream;
optionally, wherein separating the draw solute from the dilute draw solution comprises: reverse osmosis; volatilization; heating; a flushing gas; a vacuum or partial vacuum; agitation; or any combination thereof; and
e. reconstituting the concentrated draw solution from the isolated draw solute;
optionally, wherein reconstituting the concentrated draw solution comprises:

I. introducing an ionizing trigger, such as carbon dioxide, to an aqueous solution of trimethylamine;
II. introducing trimethylamine to an aqueous solution of an ionizing trigger, such as carbon dioxide;
III. simultaneously introducing trimethylamine and an ionizing trigger such as carbon dioxide to an aqueous solution; or
IV. any combination thereof.

4. The process of claim 3, wherein the purified water stream comprises ≤0.5 wt% total dissolved solids.

5. The process of any one of claims 1-4, wherein the feed stream is at a temperature of:

(i) ≤20°C; optionally, wherein the feed stream is at a temperature of between 0 - 15°C; or, alternatively, between 0 - 10°C; or, alternatively between 0 - 5°C; or, alternatively, between 3 - 5°C; or
(ii) between ≥30°C - ≤60°C; optionally, wherein the feed stream is at a temperature of between 30 - 60°C; or, alternatively, 30 - 50°C; or, alternatively, 30 - 40°C; or, alternatively, 30 - 35°C.

6. The process of any one of claims 1-5, wherein the feed stream:

(i) has an acidic pH; optionally, wherein the feed stream has a pH ≤ 6; or, alternatively, ≤ 5; or, alternatively, ≤ 3; or

(ii) has a basic pH; optionally, wherein the feed stream has a pH $\geq$ 8; or, alternatively, $\geq$ 9; or, alternatively, $\geq$ 11.

7. The process of any one of claims 1-6, wherein the feed stream comprises organic content; optionally, wherein the organic content of the feed stream comprises suspended or solubilized organic compounds, carbohydrates, polysaccharides, proteins, algae, viruses, plant matter, animal matter, or any combination thereof.

8. The process of any one of claims 1-7, wherein the feed stream comprises suspended solids.

9. The process of any one of claims 1-8, wherein the feed stream comprises between 5 - 30wt% total dissolved solids; or, alternatively, between 5 - 25wt% total dissolved solids; or, alternatively, between 5 - 20wt% total dissolved solids; or, alternatively, between 5 - 15wt% total dissolved solids; or, alternatively, between 5 - 10wt% total dissolved solids; or, alternatively, between 6 - 10wt% total dissolved solids;
optionally, wherein the total dissolved solids comprise metal oxides; minerals; monovalent ions; divalent ions; trivalent ions; or any combination thereof.

10. The process of any one of claims 1-9, wherein the feed stream is hard water, process water, produced water, flowback water, wastewater, or any combination thereof.

11. The process of any one of claims 1-10, wherein the feed stream is a complex feed stream that comprises both organic content and suspended solids.

12. A forward osmosis system, comprising:

an aqueous draw solution having a draw solute concentration between 60 - 70 wt%, the draw solute comprising ionized trimethylamine and a counterion; and
at least one forward osmosis element, comprising

a semi-permeable membrane that is selectively permeable to water, having a first side and a second side;
at least one port to bring a feed stream in fluid communication with the first side of the membrane, wherein the feed stream comprises $\geq$5wt% total dissolved solids; and
at least one port to bring the draw solution in fluid communication with the second side of the membrane,

wherein water flows from the feed stream through the semi-permeable membrane into the draw solution to form a concentrated feed stream and a diluted draw solution.

13. The forward osmosis system of claim 12, further comprising a system for regenerating the draw solution, comprising

a. means for isolating the draw solutes or non-ionized forms of the draw solutes from the dilute draw solution; optionally, wherein means for isolating the draw solute from the dilute draw solution comprises: a reverse osmosis system; volatilization; heating; a flushing gas; a vacuum or partial vacuum; agitation; or any combination thereof;
b. means for reconstituting the draw solution from the isolated draw solutes or the non-ionized forms of the draw solutes;
optionally, wherein means for reconstituting the draw solution from the isolated draw solutes or the non-ionized forms of the draw solutes comprises:

I. means for introducing an ionizing trigger, such as carbon dioxide, to an aqueous solution of trimethylamine;
II. means for introducing trimethylamine to an aqueous solution of an ionizing trigger, such as carbon dioxide;
III. means for simultaneously introducing trimethylamine and an ionizing trigger such as carbon dioxide to an aqueous solution;
or
IV. any combination thereof.

14. The process of any one of claims 1 - 11 or the system of claim 12 or 13, wherein the process or system is:

i) a closed;
ii) a continuously cycled; or
iii) a combination thereof.

15. An aqueous draw solution for a forward osmosis process, wherein the aqueous draw solution has a draw solute concentration between 60 - 70wt%, wherein the draw solute comprises ionized trimethylamine and a counter ion such as carbonate, bicarbonate, or a combination thereof.

FIGURE 1A

Calibration curve for GC-FID analysis of ionized trimethylamine

$y = 1.5998x - 0.0271$
$R^2 = 0.9993$

[AreaAnalyte]/[AreaIsopropanol] vs wt% Aqueous Ionized Trimethylamine

FIGURE 1B

FIGURE 1C

FIGURE 2

Mass change of draw solution over 3 hours with a TCM-1 or TCM-2 membrane (33 wt% ionized trimethylamine draw solution)

FIGURE 3

**FIGURE 4**

Flux based on first hour of operation of a flow cell equipped with a TCM-1 membrane, a 33 wt% ionized trimethylamine draw solution, and 3 wt% NaCl feed solution, over 28 days

FIGURE 5

FIGURE 6

FIGURE 7

Mass change of 66 wt% ionized trimethylamine draw solution over 3 hours, in a flow cell equipped with a TCM-1 membrane and incorporation of CaCl$_2$ into the feed solution (%TDS)

FIGURE 8

Mass change of 66 wt% ionized trimethylamine draw solution over 3 hours, in a flow cell equipped with a TCM-1 membrane, and 6 wt% TDS feed solution, while varying temperature of said feed solution (FS)

FIGURE 9

FIGURE 10

Mass change of 33 wt% ionized trimethylamine draw solution over 3 hours, in a flow cell equipped with a TCM-1 membrane and 6 wt% TDS feed solution, with varying pH of the feed solution

FIGURE 11

Input for Applied
$CO_2$ Pressure

Pressure Vessel

Overhead Stirrer

Aqueous Solution of TMA

FIGURE 12

FIGURE 13

FIGURE 14

**FIGURE 15**

FIGURE 16

FIGURE 17

FIGURE 18

FIGURE 19

# EP 4 071 117 A1

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/248447 A1 (IKEDA MORIHITO [JP] ET AL) 26 September 2013 (2013-09-26) * paragraphs [0037], [0038], [0058], [0107], [0075], [0076], [0098]; table 4 * * the whole document * | 1-15 | INV. C02F1/44 B01D61/00 |
| X | EP 2 623 185 A1 (FUJIFILM CORP [JP]) 7 August 2013 (2013-08-07) * the whole document * | 1-15 | |
| X | CHANHEE BOO ET AL: "Performance evaluation of trimethylamine–carbon dioxide thermolytic draw solution for engineered osmosis", JOURNAL OF MEMBRANE SCIENCE, vol. 473, 1 January 2015 (2015-01-01), pages 302-309, XP055363226, NL ISSN: 0376-7388, DOI: 10.1016/j.memsci.2014.09.026 * abstract * * Matrials and methods; table 2 * * the whole document * | 1-15 | |
| | | | **TECHNICAL FIELDS SEARCHED (IPC)** |
| | | | F17C |
| X | CA 2 891 474 A1 (OASYS WATER INC [US]) 22 May 2014 (2014-05-22) * paragraphs [0036], [0049], [0059] – [0061]; figure 7a * | 1-15 | |
| A | US 2014/076810 A1 (JESSOP PHILIP G [CA] ET AL) 20 March 2014 (2014-03-20) * paragraph [0006]; example 18 * | 1-15 | |
| A | US 2013/105377 A1 (JESSOP PHILIP G [CA] ET AL) 2 May 2013 (2013-05-02) * claims 10-24 * | 1-15 | |

-/--

The present search report has been drawn up for all claims

| Place of search | Date of completion of the search | Examiner |
|---|---|---|
| Munich | 19 August 2022 | Hennebrüder, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**Europäisches Patentamt**
**European Patent Office**
**Office européen des brevets**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DEVIN L. SHAFFER ET AL: "Desalination and Reuse of High-Salinity Shale Gas Produced Water: Drivers, Technologies, and Future Directions", ENVIRONMENTAL SCIENCE & TECHNOLOGY, vol. 47, no. 17, 3 September 2013 (2013-09-03), pages 9569-9583, XP055201636, ISSN: 0013-936X, DOI: 10.1021/es401966e * bridging ; page 9577 - page 9578 * * page 9578, paragraph 4 * * page 9577, right-hand column; figures 3a, 6a * | 1-15 | |

-----

**TECHNICAL FIELDS SEARCHED (IPC)**

The present search report has been drawn up for all claims

| Place of search | Date of completion of the search | Examiner |
|---|---|---|
| Munich | 19 August 2022 | Hennebrüder, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 4367

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2022

| Patent document cited in search report | | | Publication date | Patent family member(s) | | Publication date |
|---|---|---|---|---|---|---|
| US 2013248447 | A1 | 26-09-2013 | CN | 103153440 | A | 12-06-2013 |
| | | | EP | 2623185 | A1 | 07-08-2013 |
| | | | ES | 2592689 | T3 | 01-12-2016 |
| | | | JP | 5749132 | B2 | 15-07-2015 |
| | | | JP | 2012091166 | A | 17-05-2012 |
| | | | US | 2013248447 | A1 | 26-09-2013 |
| | | | US | 2016175777 | A1 | 23-06-2016 |
| | | | US | 2016236951 | A1 | 18-08-2016 |
| | | | US | 2018257959 | A1 | 13-09-2018 |
| | | | WO | 2012043669 | A1 | 05-04-2012 |
| EP 2623185 | A1 | 07-08-2013 | CN | 103153440 | A | 12-06-2013 |
| | | | EP | 2623185 | A1 | 07-08-2013 |
| | | | ES | 2592689 | T3 | 01-12-2016 |
| | | | JP | 5749132 | B2 | 15-07-2015 |
| | | | JP | 2012091166 | A | 17-05-2012 |
| | | | US | 2013248447 | A1 | 26-09-2013 |
| | | | US | 2016175777 | A1 | 23-06-2016 |
| | | | US | 2016236951 | A1 | 18-08-2016 |
| | | | US | 2018257959 | A1 | 13-09-2018 |
| | | | WO | 2012043669 | A1 | 05-04-2012 |
| CA 2891474 | A1 | 22-05-2014 | AU | 2013344847 | A1 | 14-05-2015 |
| | | | BR | 112015011092 | A2 | 11-07-2017 |
| | | | CA | 2891474 | A1 | 22-05-2014 |
| | | | CL | 2015001320 | A1 | 07-08-2015 |
| | | | CN | 105026019 | A | 04-11-2015 |
| | | | EP | 2919890 | A1 | 23-09-2015 |
| | | | JP | 2016504179 | A | 12-02-2016 |
| | | | KR | 20150084039 | A | 21-07-2015 |
| | | | PE | 20150972 | A1 | 09-07-2015 |
| | | | SG | 11201503606R | A | 29-06-2015 |
| | | | US | 2015273396 | A1 | 01-10-2015 |
| | | | WO | 2014078415 | A1 | 22-05-2014 |
| US 2014076810 | A1 | 20-03-2014 | AU | 2011342287 | A1 | 02-05-2013 |
| | | | BR | 112013014972 | A2 | 13-09-2016 |
| | | | CN | 103459439 | A | 18-12-2013 |
| | | | EP | 2651992 | A1 | 23-10-2013 |
| | | | JP | 6599082 | B2 | 30-10-2019 |
| | | | JP | 2014501168 | A | 20-01-2014 |
| | | | JP | 2018114497 | A | 26-07-2018 |
| | | | MX | 363651 | B | 28-03-2019 |
| | | | SG | 191138 | A1 | 31-07-2013 |
| | | | US | 2014076810 | A1 | 20-03-2014 |
| | | | WO | 2012079175 | A1 | 21-06-2012 |

EPO FORM P0459

For more details about this annex : see Official Journal of the European Patent Office, No. 12/82

**page 1 of 2**

# EP 4 071 117 A1

## ANNEX TO THE EUROPEAN SEARCH REPORT
## ON EUROPEAN PATENT APPLICATION NO.

EP 22 15 4367

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2022

| Patent document cited in search report | Publication date | Patent family member(s) | | Publication date |
|---|---|---|---|---|
| | | ZA | 201304437 B | 27-01-2016 |
| US 2013105377 A1 | 02-05-2013 | AU | 2011214865 A1 | 06-09-2012 |
| | | BR | 112012020112 A2 | 11-08-2020 |
| | | CA | 2789498 A1 | 18-08-2011 |
| | | CN | 102892713 A | 23-01-2013 |
| | | EP | 2534106 A1 | 19-12-2012 |
| | | EP | 3653584 A1 | 20-05-2020 |
| | | HK | 1177927 A1 | 30-08-2013 |
| | | JP | 6431658 B2 | 28-11-2018 |
| | | JP | 2013518718 A | 23-05-2013 |
| | | JP | 2016128164 A | 14-07-2016 |
| | | JP | 2018103180 A | 05-07-2018 |
| | | MX | 364273 B | 22-04-2019 |
| | | SG | 183909 A1 | 30-10-2012 |
| | | SG | 10201501027X A | 29-04-2015 |
| | | US | 2013105377 A1 | 02-05-2013 |
| | | US | 2019315637 A1 | 17-10-2019 |
| | | WO | 2011097727 A1 | 18-08-2011 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2011050075 W, Jessop
- US 3130156 A
- US 7560029 B
- JP 2011072261 W
- CA 2011050777
- CA 2011050777 W

**Non-patent literature cited in the description**

- **SHAFFER, D. L. et al.** *Environ. Sci. Technol,* 2013, vol. 47, 9569-9583
- **R.L. MCGINNIS et al.** *Desalination,* 2013, vol. 312, 67-74
- **SHAFFER, D. L. et al.** *Environ. Sci. Technol.,* 2013, vol. 47, 9569-9583
- **PAKTINAT, J. et al.** *Canadian Society for Unconventional Gas/Society of Petroleum Engineers,* 2011, 149272
- **STONE, M. L. et al.** *Desalination,* 2013, vol. 312, 124-129
- **MUCCI, A. ; DOMAIN, R. ; BENOIT, R. L.** *Can. J. Chem.,* 1980, vol. 58, 953-958
- **BOO, C.** *Journal of Membrane Science,* 2015, vol. 473, 302-309